# EUROPÄISCHE PATENTSCHRIFT

(11) **EP 3 311 961 B1**
(45) Veröffentlichungstag und Bekanntmachung des Hinweises auf die Patenterteilung: **11.08.2021**
(21) Anmeldenummer: 16194756.9
(22) Anmeldetag: 20.10.2016
(51) Int. Cl.: B25J 19/00

(54) **ROBOTER SOWIE LASTAUSGLEICHSANORDNUNG FÜR EINEN ROBOTER**
ROBOT AND LOAD BALANCER FOR A ROBOT
ROBOT ET DISPOSITIF D'ÉQUILIBRAGE POUR UN ROBOT

(43) Veröffentlichungstag der Anmeldung: 25.04.2018
(73) Patentinhaber: Bucher Hydraulics Erding GmbH, 85435 Erding (DE)
(72) Erfinder: WANDINGER, Martin, 84419 Obertaufkirchen (DE)
(74) Vertreter: Witte, Weller & Partner Patentanwälte mbB

(56) Entgegenhaltungen:
- WO-A1-96/31325
- US-A- 3 241 687
- US-A- 5 456 130
- US-A1- 2010 212 305
- None

## Beschreibung

Die vorliegende Offenbarung betrifft eine fluidische Lastausgleichsanordnung für einen mehrachsigen Roboter, der zumindest zwei gelenkig miteinander verbundene Koppelglieder aufweist, die relativ zueinander beweglich, insbesondere verschwenkbar sind.

Aus der US 5,456,130 A ist eine mechanische Hebevorrichtung bekannt, die einen Lastausgleichsarm zum Tragen einer Last umfasst. Die Hebevorrichtung weist einen Hubmechanismus zur Bereitstellung einer ausgleichenden Hubkraft, die an einen beladenen und einen nicht beladenen Zustand der Hebevorrichtung angepasst werden kann, und eine Bedieneinrichtung zum Aufbringen einer Bedienkraft auf, wobei die Bedieneinrichtung in Reaktion auf die Bedienkraft ein Vorspannsignal erzeugt, welches die Richtung der Bedienkraft widerspiegelt. Ferner ist eine Steuereinrichtung vorgesehen, die in Reaktion auf das Vorspannsignal die ausgleichende Hubkraft anpasst, um eine Bewegung des Lastausgleichsarms in die gewünschte Richtung zu unterstützen.

Aus der US 3,241,687 A ist eine mehrgelenkige Handhabungsvorrichtung bekannt, welche über eine kinematisch ähnlich gestaltete Steuervorrichtung manuell bedienbar ist. Die Handhabungsvorrichtung weist eine Lastausgleichsanordnung auf.

Aus der US 2010/212305 A1 ist eine Ausgleichsanordnung zum Ausgleichen zweier relativ zueinander beweglicher Teile bekannt. Die Ausgleichsanordnung umfasst eine Gasfeder und ein Verdichtersystem, wobei das Verdichtersystem einen Druck in der Gasfeder erfasst und den Druck einstellt, wenn er von einem vorgegebenen Wert abweicht.

Mehrachsige Roboter, insbesondere sogenannte Industrieroboter, sind im Stand der Technik hinreichend bekannt. Üblicherweise umfassen derartige Roboter zwei, drei oder mehr miteinander verbundene und relativ zueinander bewegliche Koppelglieder. Beispielhaft können diese Koppelglieder als Gestell, Schwinge, Arm/Ausleger, Hand usw. bezeichnet werden. Roboter allgemeiner Art weisen üblicherweise eine serielle kinematische Kette auf. Derartige Roboter werden auch als Gelenkarmroboter bezeichnet. Es sind Roboter mit zwei bis sieben oder gar mehr Rotationsachsen bzw. Schwenkachsen bekannt. Bei einer seriellen Kinematik bilden die Koppelglieder des Roboters, ausgehend vom Gestell, eine serielle Kette. Das heißt, ein Antrieb am Gestell bzw. an Koppelgliedern, die in der kinematischen Kette gestellnah angeordnet sind, muss nicht nur das jeweils direkt folgende Koppelglied sondern auch gegebenenfalls weitere Koppelglieder in der kinematischen Kette in Richtung auf ein Endglied halten und/oder bewegen. Dies führt zu erhöhten Haltemomenten bzw. allgemein zu einer Erhöhung der Belastung und Trägheit.

Unter einem Industrieroboter versteht man im Allgemeinen eine Handhabungsmaschine, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar ist. Industrieroboter umfassen im Wesentlichen eine Steuerungsvorrichtung und einen Roboterarm mit mehreren Achsen und gegebenenfalls Hebeln, die von Antrieben, die die Steuerungsvorrichtung ansteuern, bewegt werden. Industrieroboter, insbesondere Industrieroboter mit einer relativ großen Traglast, können zumindest für eine ihrer Achsen, insbesondere für die zweite Achse der Kinematikkette bzw. die horizontal liegende Achse, ein Gewichts- bzw. Masseausgleichssystem aufweisen, das z.B. eine Schraubenfeder oder einen anderen Energiespeicher umfasst.

Lastausgleichsanordnungen für Roboter sind üblicherweise zwischen zwei einander benachbarten Koppelgliedern angeordnet, die relativ zueinander beweglich, insbesondere verschwenkbar sind. Es sind verschiedene Arten von Lastausgleichsanordnungen bekannt, beispielsweise rein mechanische Massen-basierte Ausgleichsanordnungen, Feder-basierte Lastausgleichsanordnungen, fluidische Lastausgleichsanordnungen, usw. Ziel einer solchen Lastausgleichsanordnung ist grundsätzlich, statische und/oder kinematische Energie bei der Bewegung der Koppelglieder des Roboters relativ zueinander zu speichern, um diese etwa bei einer gegenläufigen Bewegung wieder verfügbar zu machen. Auf diese Weise können etwa ungünstige Lastsituationen bzw. Extremlagen der Koppelglieder des Roboters dahingehend optimiert werden, dass das aufzubringende Haltemoment bzw. Lastmoment des Antriebs verringert ist.

Aus der WO 96/31325 A1 ist ein mehrachsiger Industrieroboter bekannt, mit einem Gestell, einer Schwinge, einem Ausleger und einer Roboterhand, die gelenkig aneinander gelagert und angetrieben sind, wobei die Schwinge seitlich neben der von der Gestellachse und von der Mitte des Handflansches gebildeten Systemebene angeordnet ist, wobei die Schwinge sowie der Ausleger jeweils eine einseitige fliegende Lagerung aufweisen, wobei die Schwinge mit einem statischen hydraulischen Massenausgleich verbunden ist, der auf ihrer Seite der Systemebene angeordnet ist, wobei das Getriebe und das Lager der Schwinge auf der einen Seite der Systemebene angeordnet sind, und wobei der Motor der Schwinge auf der anderen Seite der Systemebene angeordnet ist. Ergänzend wird auf die EP 2 301 727 A1 verwiesen, die eine Weiterbildung der Massenausgleichsanordnung offenbart.

Aus der DE 10 2014 104 173 A1 ist ein Mehrgelenkroboter bekannt, mit einer mechanische Robotereinheit, die mindestens einen Arm aufweist, einer Gasfeder, die an dem Arm angebracht ist, und mit einem Controller, der die mechanische Robotereinheit steuert, wobei die Gasfeder einen Zylinder, ein komprimierbares Inertgas, das in dem Zylinder eingeschlossen ist, und eine Kolbenstange umfasst, die dazu ausgelegt ist, im Zylinder zu gleiten, und wobei die Gasfeder als Gasausgleicher ausgelegt ist, der die Last auf einem Servomotor verringert, der den Arm antreibt, und wobei der Controller dazu ausgebildet ist, einen Referenzstromwert eines Servomotors, der den Arm betätigt, zu einem Referenzzeitpunkt zu ermitteln, zu dem der Servomotor mit Strom versorgt und geregelt wird, einen Objektstromwert des Servomotors zu einem Zeitpunkt zu ermitteln, der sich von dem Referenzzeitpunkt unterscheidet, wenn der Servomotor unter den gleichen Betriebsbedingungen wie zum Referenzzeitpunkt mit Strom versorgt und geregelt wird, eine Differenz zwischen dem Referenzstromwert und dem Objektstromwert zu berechnen, und ein Ausmaß des Abfalls des Innendrucks des komprimierbaren Inertgases der Gasfeder aus der Differenz zu berechnen.

### HILFSANTRAG

Vor diesem Hintergrund liegt der Erfindung die Aufgabe zugrunde, eine fluidische Lastausgleichsanordnung für einen mehrachsigen Roboter sowie einen mit einer derartigen Lastausgleichsanordnung versehenen Roboter anzugeben, die dazu beitragen, Spitzenlasten der Antriebsachsen sowie nach Möglichkeit einen Energiebedarf des Roboters zu minimieren. Ferner soll nach Möglichkeit das Betriebsverhalten des Roboters optimiert werden, beispielhaft durch zumindest teilweise Kompensation oder Glättung dynamischer und/oder statischer Lasten an den beteiligten Koppelgliedern. Ferner soll nach Möglichkeit der Funktionsumfang der Lastausgleichsanordnung erhöht werden. Dies soll möglichst kosteneffizient realisierbar sein.

Diese Aufgabe wird erfindungsgemäß durch eine fluidische Lastausgleichsanordnung für einen mehrachsigen Roboter, der zumindest zwei gelenkig miteinander verbundene Koppelglieder aufweist, gelöst, wobei die Lastausgleichsanordnung Folgendes aufweist:
- einen Hydraulikzylinder, der an zwei zueinander beweglichen Koppelgliedern befestigt ist, wobei ein erstes Ende des Hydraulikzylinders mit einem ersten Koppelglied und ein zweites Ende mit einem zweiten Koppelglied verbunden ist,
- zumindest einen Druckspeicher, der mit dem Hydraulikzylinder koppelbar ist, und
- eine Steuereinheit, die zwischen dem Hydraulikzylinder und dem zumindest einen Druckspeicher angeordnet ist, um den Hydraulikzylinder und den zumindest einen Druckspeicher miteinander fluidisch zu koppeln,
wobei die Steuereinheit einem ersten Fluidpfad und einem zweiten Fluidpfad zwischen dem Hydraulikzylinder und dem zumindest einen Druckspeicher zugeordnet ist,
wobei im ersten Fluidpfad zwischen dem Hydraulikzylinder und dem zumindest einen Druckspeicher ein Druckventil vorgesehen ist,
wobei sich zwischen dem Hydraulikzylinder und dem ersten Fluidpfad sowie dem zweiten Fluidpfad eine Verbindungsleitung erstreckt, und wobei beim zweiten Fluidpfad ein ansteuerbares Ventil vorgesehen ist, das in einem ersten Betriebszustand und einem zweiten Betriebszustand betreibbar ist, um wahlweise eine Fluidströmung durch den ersten Fluidpfad oder den zweiten Fluidpfad zu erlauben.

Die Aufgabe der Erfindung wird auf diese Weise vollkommen gelöst.

Erfindungsgemäß kann nämlich das Fluid, also das genutzte Hydrauliköl, grundsätzlich über zwei Fluidpfade zwischen dem Hydraulikzylinder und dem zumindest einen Druckspeicher hin und her strömen. Die beiden Fluidpfade sind derart gestaltet und ansteuerbar, dass zwei Betriebsmodi oder Betriebszustände für die Lastausgleichsanordnung verfügbar sind. Dies schlägt sich beispielsweise in einer Veränderung/Verschiebung einer Druck-Weg-Kennlinie der Lastausgleichsanordnung beim Übergang zwischen den beiden Betriebszuständen nieder. Die Druck-Weg-Kennlinie beschreibt beispielhaft einen Zusammenhang zwischen einem Systemdruck des genutzten Fluids (Hydrauliköl) sowie einem Hub-Zustand des Hydrau-likzylinders. Auf diese Weise kann beeinflusst werden, in welchem Maße bei einer Relativ-bewegung zwischen den beiden Koppelgliedern Energie in Druckspeicher gespeichert und/oder vom Druckspeicher abgegeben wird.

Ein Wechsel zwischen dem ersten Betriebszustand und dem zweiten Betriebszustand bewirkt eine Anpassung einer Druck-Weg-Charakteristik der Lastausgleichsanordnung. Der erste Betriebszustand kann auch als Normal-Modus bezeichnet werden. Der zweite Betriebszustand kann auch als Boost-Modus bezeichnet werden. Das ansteuerbare Ventil kann etwa als Schaltventil, Regelventil, Druckventil oder in sonstiger Weise gestaltet sein. Das ansteuerbare Ventil ist insbesondere von außen, also über die Steuereinheit, ansteuerbar. Demgemäß kann extern, also etwa durch einen Benutzer oder eine übergeordnete Steuerung, festgelegt werden, ob das Ventil im ersten oder im zweiten Betriebszustand betrieben wird und somit die Lastausgleichsanordnung im ersten oder zweiten Betriebsmodus betreibbar ist.

Es versteht sich, dass es sich bei der Kennlinienverschiebung nicht um eine ideal parallele Verschiebung handeln muss. Vielmehr erfolgt je nach Gestaltung des ansteuerbaren Ventils eine Veränderung/Anpassung der Druck-Weg-Kennlinie Kennlinie bzw. Kraft-Weg-Kennlinie, etwa einer Steigung der Kennlinie oder dgl. Dies kann etwa eine zumindest abschnittsweise geänderte Steigung oder dergleichen umfassen. DruckWerte einer Kennlinie sind proportional zu entsprechenden Kraft-Werten.

Die oben genannte Gestaltung kann insgesamt zu einem reduzierten Grundenergiebedarf bei den Motoren der Rotationsachse führen. Je nach Bedarf liegen unterschiedliche Kraft-Weg-Kennlinien vor, so dass Lastspitzen bedarfsweise optimal kompensiert werden können. Durch die Gestaltung gemäß dem obigen Aspekt der vorliegenden Offenbarung ergibt sich eine variable Kraft-Weg-Kennlinie.

Bei der Lastausgleichsanordnung ist im ersten Fluidpfad zwischen dem Hydraulikzylinder und dem zumindest einen
Druckspeicher ein Druckventil vorgesehen. Beispielhaft ist dieses Druckventil autark gestaltet, also ohne Möglichkeit der steuernden Einflussnahme von außen. Demgemäß könnte eine feste Regelcharakteristik vorgesehen sein. Es ist jedoch grundsätzlich auch vorstellbar, das Druckventil im ersten Fluidpfad anstatt mit einer Festeinstellung mit einer proportionalen Regelung oder einer grundsätzlich veränderbaren Einstellmöglichkeit zu versehen.

Dies beinhaltet nicht unbedingt, dass das Druckventil im ersten Fluidpfad während des Betriebs der Lastausgleichsanordnung von außen angesteuert wird. Jedoch ist es vorstellbar, auch auf diese Weise (zusätzlich) auf die Druck-Weg-Kennlinie einzuwirken, um bei Bedarf die Kennlinie noch variabler zu gestalten.

Gemäß einer weiteren Ausgestaltung der Lastausgleichsanordnung ist der zweite Fluidpfad im ersten Betriebszustand geöffnet, wobei der zweite Fluidpfad im zweiten Betriebszustand richtungsabhängig gesperrt ist. Auf diese Weise kann im zweiten Betriebszustand ein Zufluss zum Druckspeicher über den zweiten Fluidpfad unterbunden werden. Mit anderen Worten ist der erste Fluidpfad, dem beispielhaft das Druckventil zugeordnet ist, aktiv.

Im ersten Betriebszustand, wenn der zweite Fluidpfad geöffnet ist, kann das Fluid den zweiten Fluidpfad ungehindert durchströmen.

Gemäß einer weiteren beispielhaften Ausgestaltung der Lastausgleichsanordnung ist im zweiten Betriebszustand ein Rückfluss von dem zumindest einen Druckspeicher zu dem Hydraulikzylinders über den zweiten Fluidpfad ermöglicht, wenn ein aktueller Druck auf Seiten des zumindest einen Druckspeichers größer als ein aktueller Systemdruck auf Seiten des Hydraulikzylinders ist. Auf diese Weise kann etwa bei einer Einfahrbewegung ein Kennlinienverlauf bewirkt werden, der vom Kennlinienverlauf bei der Ausfahrbewegung abweichend ist. Insgesamt kann sich eine Hysterese-ähnliche Druck-Weg-Kennlinie für die Lastausgleichsanordnung im zweiten Betriebszustand ergeben, wenn der Hydraulikzylinder ausgefahren und eingefahren wird.

Es versteht sich, dass die vorstehend genutzen Begriffe "Ausfahren" und "Einfahren" gegebenenfalls ohne Weiteres vertauschbar sind, wenn der Hydraulikzylinder umgekehrt angeordnet ist. Die obige Zuordnung beinhaltet, dass das in der Lastausgleichsanordnung strömende Fluid (Hydrauliköl) beim Ausfahren des Hydraulikzylinders komprimiert und beim Einfahren des Hydraulikzylinders expandiert wird. Es sind also ziehende Hydraulikzylinder und drückende Hydraulikzylinder denkbar.

Gemäß einer weiteren Ausgestaltung der Lastausgleichsanordnung ist zwischen der Steuereinheit und dem Hydraulikzylinder zumindest ein weiterer Druckspeicher ausgebildet, wobei eine Verbindungsleitung zwischen der Steuereinheit und dem Hydraulikzylinder an den weiteren Druckspeicher ankoppelt. Der weitere Druckspeicher kann grundsätzlich etwa als Basisdruckspeicher bezeichnet werden. Der Basisdruckspeicher kann grundsätzlich auch mit einem Druckventil gekoppelt sein.

Der (erste) Druckspeicher, der über den ersten Fluidpfad und den zweiten Fluidpfad mit dem Hydraulikzylinder gekoppelt ist, kann auch als Ergänzungsdruckspeicher bezeichnet werden, zumindest gemäß dieser beispielhaften Ausgestaltung.

Sofern die Lastausgleichsanordnung zwei Druckspeicher aufweist, von denen einer zwischen der Steuereinheit und dem Hydraulikzylinder angeordnet ist und ein weiterer aus Sicht des Hydraulikzylinders hinter der Steuereinheit angeordnet ist, ergibt sich eine noch größere Variabilität und Gestaltungsmöglichkeit betreffend den Verlauf der Kraft-Weg-Kennlinie.

Gemäß einer beispielhaften Weiterbildung der Lastausgleichsanordnung ist der Druckspeicher als Ergänzungsdruckspeicher ausgebildet, wobei der weitere Druckspeicher als Basisdruckspeicher ausgebildet ist, wobei der Basisdruckspeicher und der Ergänzungsdruckspeicher im ersten Betriebszustand im Wesentlichen parallel geschaltet sind, und wobei der Ergänzungsdruckspeicher im zweiten Betriebszustand in Abhängigkeit von einem aktuellen Systemdruck zugeschaltet wird.

Das Umschalten zwischen den beiden Betriebsmodi erfolgt hierbei durch eine geeignete Ansteuerung des ansteuerbaren Ventils im zweiten Fluidpfad.

Gemäß einer weiteren Ausgestaltung der Lastausgleichsanordnung ist, im zweiten Betriebszustand des ansteuerbaren Ventils, bei einer Erhöhung des Systemdrucks, der erste Fluidpfad geschlossen, wenn der Systemdruck ein definiertes Druckniveau unterschreitet, wobei der erste Fluidpfad durch das Druckventil geöffnet ist, wenn der Systemdruck das definierte Druckniveau erreicht, und wobei das ansteuerbare Ventil im zweiten Fluidpfad als Rückschlagventil agiert. Auf diese Weise wird zunächst der Basisdruckspeicher mit dem Fluid befüllt, wobei je nach Regelcharakteristik des Druckventils im ersten Fluidpfad der Ergänzungsdruckspeicher druckabhängig zugeschaltet wird.

Gemäß einer weiteren beispielhaften Ausgestaltung der Lastausgleichsanordnung weist die Druck-Weg-Kennlinie im ersten Betriebszustand einen im Wesentlichen knickfreien Verlauf auf, wobei die Druck-Weg-Kennlinie im zweiten Betriebszustand eine Rampe mit größerer Steigung als eine mittlere Steigung der Druck-Weg-Kennlinie im ersten Betriebszustand sowie ferner einen im Wesentlichen konstanten (geraden) Abschnitt aufweist.

Ein knickfreier Verlauf im Sinne der obigen Definition kann beispielhaft einen geraden oder gekrümmten Verlauf, jedoch ohne Knicke, umfassen. Mathematisch betrachtet ist eine entsprechende Funktion an jedem ihrer Punkte zweimal differenzierbar, wenn sie knickfrei ist. Dies ist jedoch nicht einschränkend zu verstehen.

Gemäß einer weiteren beispielhaften Ausgestaltung der Lastausgleichsanordnung weist die Druck-Weg-Kennlinie im zweiten Betriebszustand einen richtungsabhängigen Verlauf auf, wobei die Druck-Weg-Kennlinie beim Druckaufbau bei einem Weg-Wert ein Druck-Plateau erreicht, der geringer ist als ein Weg-Wert, bei dem die Druck-Weg-Kennlinie beim Druckabbau das Druck-Plateau verlässt.

Wie oben bereits angedeutet, ist gemäß der beispielhaften Ausgestaltung der Druckaufbau mit einer Ausfahrbewegung des Hydraulikzylinders verknüpft. Der Druckabbau ist mit einer Einfahrbewegung des Hydraulikzylinders verknüpft. Es versteht sich jedoch, dass etwa bei umgedrehter Konfiguration oder in sonstiger Weise abgewandelter Ausgestaltung des Hydraulikzylinders der Druckaufbau auch beim Einfahren sowie der Druckabbau beim Ausfahren des Hydraulikzylinders erfolgen. Schlussendlich wird dies festgelegt, indem die hydraulische Verbindungsleitung an den Zylinder an einer Frontalseite (Stirnseite) des Kolbens oder an einer rückwärtigen Seite des Kolbens ankoppelt.

Gemäß einer weiteren beispielhaften Ausgestaltung der Lastausgleichsanordnung agiert das ansteuerbare Ventil im zweiten Betriebszustand nach Überschreiten einer Druckschwelle im Systemdruck als Rückschlagventil.

Gemäß einer beispielhaften Ausgestaltung der Lastausgleichsanordnung ist das ansteuerbare Ventil im zweiten Fluidpfad mit einem Aktuator versehen, insbesondere einem Elektromagneten, mit dem das Ventil ansteuerbar ist. Vorzugsweise liegt der zweite Betriebszustand vor, wenn das ansteuerbare Ventil nicht geschalten ist, wenn also beispielsweise der Aktuator nicht bestromt ist.

Gemäß einer weiteren beispielhaften Ausgestaltung der Lastausgleichsanordnung ist das ansteuerbare Ventil als Schaltventil oder als Proportionalventil gestaltet. Grundsätzlich wäre es auch vorstellbar, das ansteuerbare Ventil als Wegeventil zu gestalten, insbesondere als 2/2-Wegeventil. Kombinationen sind denkbar.

Gemäß einer weiteren Ausgestaltung der Lastausgleichsanordnung ist diese für einen mehrachsigen Roboter vorgesehen, der zumindest drei gelenkig miteinander verbundene Koppelglieder aufweist, wobei der Hydraulikzylinder als erster Hydraulikzylinder ausgebildet ist, wobei die Lastausgleichsanordnung ferner Folgendes aufweist:
- einen zweiten Hydraulikzylinder, der ein zwei zueinander beweglichen Koppelgliedern befestigt ist, wobei ein erstes Ende des zweiten Hydraulikzylinders mit dem zweiten Koppelglied und ein zweites Ende mit einem dritten Koppelglied verbunden ist,
wobei der erste Hydraulikzylinder als Master-Zylinder und der zweite Hydraulikzylinder als Slave-Zylinder ausgestaltet ist,
wobei der Master-Zylinder mit einem Druckspeicher zur Speicherung fluidischer Energie gekoppelt ist, und
wobei der Master-Zylinder und der Slave-Zylinder fluidisch miteinander gekoppelt sind.

Auf diese Weise wird die Funktionalität der Lastausgleichsanordnung auf zumindest ein weiteres Koppelglied erweitert. Somit kann eine noch gezieltere Lastkompensation beim Roboter erfolgen. Da jedoch der Slave-Zylinder nicht mit einem eigenen Druckspeicher versehen ist, ist der Aufwand zur Installation des zweiten Hydraulikzylinders gering. Gleichwohl ergibt sich für einen Antriebsmotor derjenigen Achse, die zwischen dem zweiten Koppelglied und dem dritten Koppelglied vorgesehen ist, im statischen Zustand keine oder nur eine geringe Mehrbelastung, die jedoch durch die positiven Effekte der Lastausgleichsanordnung deutlich kompensiert wird. Insgesamt kann sich auch bei dieser Achse eine Reduktion des Energiebedarfs sowie eine Verringerung der Massenträgheit ergeben. Der Roboter kann noch dynamischer betätigt werden, Bauteilbelastungen im Betrieb können sinken.

Vorzugsweise ist der Roboter als mehrachsiger Roboter mit linearer Kinematik ausgestaltet. Der Master-Zylinder und der Slave-Zylinder sind vorzugsweise fluidisch direkt miteinander gekoppelt. Das heißt, zumindest in einem normalen Betriebszustand ist zwischen dem Master-Zylinder und dem Slave-Zylinder kein Ventil vorgesehen, das einen Fluss des Fluids (Hydrauliköl) zwischen dem Master-Zylinder und dem Slave-Zylinder unterbindet oder hemmt.

Allgemein kann der Master-Zylinder auch als primärer Zylinder bezeichnet werden. Demgemäß kann der Slave-Zylinder allgemein auch als sekundärer Zylinder bezeichnet werden. Der Slave-Zylinder nutzt den Druckspeicher, der dem Master-Zylinder zugeordnet ist, zur Speicherung fluidischer Energie.

Gemäß einer beispielhaften Ausgestaltung der Lastausgleichsanordnung sind der Master-Zylinder und der Slave-Zylinder über eine Verbindungsleitung miteinander verbunden. Insbesondere kann es sich hierbei um eine permanent geöffnete Verbindungsleitung handeln. Bei der Verbindungsleitung kann es sich um eine flexible Leitung handeln. Es ist jedoch auch vorstellbar, die Verbindungsleitung zumindest abschnittsweise als starre Leitung auszuführen. Zumindest in einem normalen Betriebsmodus ist es nicht vorgesehen, die Verbindungsleitung zu sperren.

Der Master-Zylinder und der Slave-Zylinder können derart miteinander fluidisch gekoppelt werden, dass sich aus Sicht der Zylinder gleichgerichtete Bewegungen (etwa Einfahrbewegung oder Ausfahrbewegung) ergeben, die entsprechend zu einer Erhöhung des Systemdrucks oder zu einer Verringerung des Systemdrucks führen. Jedoch ist es auch vorstellbar, dass einer der beiden Zylinder einfährt, wogegen der andere der beiden Zylinder ausfährt, je nach aktueller Bewegung der beteiligten Koppelglieder des Roboters. Somit ist es auch vorstellbar, dass einer der Zylinder das Fluid grundsätzlich komprimiert, wogegen der andere Zylinder das Fluid grundsätzlich dekomprimiert/expandiert. Je nach Gestaltung und der tatsächlich durchgeführten Bewegung kann die Wirkung des einen Zylinders die Wirkung des anderen Zylinders kompensieren oder gar übersteigen.

Gemäß einer weiteren beispielhaften Ausgestaltung der Lastausgangsvorrichtung ist die Verbindungsleitung derart flexibel gestaltet, dass eine Relativbewegung zwischen dem Master-Zylinder und dem Slave-Zylinder ermöglicht ist. Dies ergibt sich schon durch die Relativbewegungen, insbesondere die relative Verschwenkbarkeit zwischen den beteiligten drei Koppelgliedern. Beispielhaft können die beteiligten drei Koppelglieder, etwa ein Karussell, eine Schwinge und ein Arm des Roboters, in einer ersten Stellung eine Z-Konfiguration aufweisen. In einer zweiten Stellung kann sich beispielsweise eine im Wesentlichen lineare Ausrichtung und Anordnung ergeben.

Es ist auch vorstellbar, dass die beteiligten Koppelglieder eine Bewegung vollziehen, die einen Übergang zwischen einer Z-förmigen Gestalt und einer hierzu spiegelverkehrten Z-förmigen Gestalt umfasst. Das heißt, die beteiligten Koppelglieder sind in einer ersten Stellung etwa Z-förmig angeordnet, wobei die Koppelglieder mit ihrer Kette in einer zweiten Stellung eine hierzu (beispielsweise horizontal) gespiegelte Gesamtkonfiguration aufweisen und, im Vergleich zu ihrer Orientierung in der ersten Stellung, gegensinnig orientiert sind. Es versteht sich, dass die einzelnen Koppelglieder hierzu nicht gespiegelt sondern entsprechend bewegt werden. Diejenigen Koppelglieder, die den oberen und den unteren Schenkel des Z bilden, werden zwischen den beiden Stellungen um etwa 180° verschwenkt, so dass sich gegensinnige Orientierungen ergeben

Gemäß einer weiteren beispielhaften Ausgestaltung der Lastausgleichsanordnung koppelt die Verbindungsleitung an einen Zylinderraum des Master-Zylinders, der durch eine rückwärtige Kolbenfläche begrenzt ist, und an einen Zylinderraum des Slave-Zylinders an, der durch eine rückwärtige Kolbenfläche begrenzt ist. Mit anderen Worten komprimieren die beiden Zylinder jeweils beim Ausfahren das Fluid. Beim Einfahren erfolgt eine Druckreduzierung bzw. eine Expansion des Fluids. Dies schließt gleichwohl nicht aus, dass in weiteren beispielhaften Ausgestaltungen die Hydraulikzylinder als drückender Zylinder gestaltet sind. Bei dieser Ausgestaltung wird das Fluid beim Einfahren komprimiert. Es versteht sich, dass auch Ausführungsformen denkbar sind, bei denen einer der Hydraulikzylinder als drückender Zylinder und ein anderer als ziehender Zylinder gestaltet ist.

Gemäß einer weiteren beispielhaften Ausgestaltung der Lastausgleichsanordnung ist ein Systemdruck im Master-Zylinder, im Slave-Zylinder und im Druckspeicher im Wesentlichen gleich. Dies gilt insbesondere für den Master-Zylinder und den Slave-Zylinder, die fluidisch miteinander verbunden sind. Auch der Druckspeicher kann unmittelbar fluidisch mit dem Master-Zylinder gekoppelt sein. Es ist jedoch gemäß alternativer Ausgestaltung auch denkbar, zwischen dem Druckspeicher und dem Master-Zylinder ein Druckventil oder ein andersartig gestaltetes Ventil vorzusehen, um den Fluss des Fluids zwischen dem Master-Zylinder und dem Druckspeicher zu steuern.

Gemäß einer weiteren beispielhaften Ausgestaltung der Lastausgleichsanordnung werden der Master-Zylinder und der Slave-Zylinder relativ zueinander verschwenkt, wenn das erste Koppelglied und das zweite Koppelglied und/oder das zweite Koppelglied und das dritte Koppelglied jeweils relativ zueinander verschwenkt werden.

Gemäß einer weiteren Ausgestaltung der Lastausgleichsanordnung koppelt der Druckspeicher an eine Zylinderwand des Master-Zylinders an. Dies hat den Vorteil, dass zwischen dem Master-Zylinder und dem Druckspeicher keine langen Leitungen erforderlich sind. Vielmehr kann der Master-Zylinder insgesamt als modulartig gestaltete Baueinheit gestaltet sein.

Gemäß einer weiteren beispielhaften Ausgestaltung der Lastausgangsanordnung sind zumindest zwei Druckspeicher vorgesehen, die mit dem Master-Zylinder gekoppelt sind, und die vorzugsweise an eine Zylinderwand des Master-Zylinders ankoppeln. Insgesamt kann eine Speichereinheit vorgesehen sein, die zumindest einen Druckspeicher, gegebenenfalls jedoch auch zwei oder mehr Druckspeicher umfasst. Dies kann verschiedene Vorteile haben, etwa im Hinblick auf Zulassungsvoraussetzungen, Wartungsvorschriften und dergleichen.

Der Master-Zylinder ist derjenige Zylinder, der grundsätzlich dem Gestell des Roboters in der kinematischen Kette näher ist als der Slave-Zylinder. Demgemäß ist es von Vorteil, den zumindest einen Druckspeicher beim Master-Zylinder vorzusehen, da der Druckspeicher auf diese Weise nicht von in der kinematischen Kette folgenden Antrieben bewegt werden muss.

Gemäß einer weiteren Ausgestaltung der Lastausgleichsanordnung ist ein Zylindergehäuse des Master-Zylinders am ersten Koppelglied gelenkig aufgenommen, wobei eine Kolbenstange des Master-Zylinders am zweiten Koppelglied gelenkig aufgenommen ist, wobei ein Zylindergehäuse des Slave-Zylinders am zweiten Koppelglied gelenkig aufgenommen ist, und wobei eine Kolbenstange des Slave-Zylinders am dritten Koppelglied aufgenommen ist.

Demgemäß sind die jeweils grundsätzlich schwereren Teile, nämlich die Zylindergehäuse, an dem Koppelglied aufgenommen, das dem Gestell des Roboters näher ist. Dies ist günstig für die Massenverteilung.

Es versteht sich, dass abweichend hiervon abweichende Ausgestaltungen denkbar sind, bei denen die Zuordnung umgekehrt erfolgt. Demgemäß ist beispielsweise das Zylindergehäuse des Master-Zylinders am zweiten Koppelglied gelenkig aufgenommen, wobei die Kolbenstange des Master-Zylinders am ersten Koppelglied gelenkig aufgenommen ist, wobei das Zylindergehäuse des Slave-Zylinders am dritten Koppelglied gelenkig aufgenommen ist, und wobei die Kolbenstange des Slave-Zylinders am zweiten Koppelglied aufgenommen ist.

Gemäß einer weiteren beispielhaften Ausgestaltung der Lastausgleichsanordnung weist der Master-Zylinder eine Wirkfläche auf, die größer als eine Wirkfläche des Slave-Zylinders ist, wobei die Wirkfläche des Slave-Zylinders etwa 30 % bis 70 %, vorzugsweise etwa 40 % bis 60 % der Wirkfläche des Master-Zylinders umfasst.

Bei der Wirkfläche handelt es sich um diejenige Kolbenfläche, etwa um eine Stirnfläche oder um eine rückwärtige Fläche, mit der der Kolben auf das im Hydraulikzylinder enthaltene Fluid einwirkt, um dieses zu verdrängen bzw. unter Druck zu setzen.

Es versteht sich, dass auch abweichende Gestaltungen denkbar sind, bei denen das Wirkflächenverhältnis abweichend gewählt ist und beispielsweise sogar 1:1 betragen kann. Bei diesen Ausgestaltungen kann die jeweilige Kinematik derart gewählt werden, dass sich die gewünschte Kraftübersetzung ergibt. Die Lage der Aufnahmepunkte der Hydraulikzylinder an den Koppelgliedern kann zu Auslegungszwecken variiert werden.

Gemäß einem weiteren Aspekt der vorliegenden Offenbarung wird die Aufgabe der Erfindung durch einen Roboter, insbesondere einen Industrieroboter in Form eines Gelenkarmroboters, gelöst, der mit einer Lastausgleichsanordnung gemäß zumindest einer hierin beschriebenen Ausgestaltung versehen ist, die zumindest zwei gelenkig miteinander verbundenen Koppelgliedern des Roboters zugeordnet ist.

Gemäß einer beispielhaften Ausgestaltung des Roboters ist die Lastausgleichsvorrichtung einem als Karussell ausgebildeten Koppelglied und einem als Schwinge ausgebildeten Koppelglied zugeordnet, wobei der Hydraulikzylinder gelenkig an Drehpunkten aufgenommen ist, die von einer Rotationsachse zwischen den beiden Koppelgliedern radial beabstandet sind.

Gemäß einer weiteren Ausgestaltung des Roboters ist der Hydraulikzylinder derart angeordnet, dass sich bei einer maximalen Relativbewegung zwischen dem Karussell und der Schwinge beim Hydraulikzylinder sowohl eine Einfahrbewegung als auch eine Ausfahrbewegung ergibt. Eine maximale Relativbewegung kann etwa eine Schwenkbewegung zwischen den beiden beteiligten Koppelgliedern umfassen, die einen größtmöglichen Schwenkwinkel umfasst. Je nachdem, welche Kräfte und Momente an den Koppelgliedern erwartet werden, sei es durch den Roboter selbst oder durch die aufgenommene Last, kann somit in einer Vielzahl von Betriebszuständen durch die Lastausgleichsanordnung eine Reduzierung der anliegenden Momente bewirkt werden.

Weitere Vorteile und Merkmale der Erfindung ergeben sich aus der nachfolgenden Beschreibung mehrerer bevorzugter Ausführungsbeispiele unter Bezugnahme auf die Zeichnungen. Es zeigen:
- Fig. 1: eine schematische Seitenansicht einer Ausgestaltung eines Roboters, der mit einer Lastausgleichsanordnung versehen ist, in einem eingefahrenen Zustand;
- Fig. 2: eine Seitenansicht einer weiteren Ausführungsform eines Roboters, der mit einer Lastausgleichsanordnung versehen ist, in einem Zustand gemäß Fig. 1;
- Fig. 3: eine weitere Ansicht des Roboters gemäß Fig. 1 in einer ausgefahrenen Stellung;
- Fig. 4: eine weitere Seitenansicht des Roboters gemäß Fig. 2 in einer ausgefahrenen Stellung;
- Fig. 5: eine schematische Prinzipdarstellung einer beispielhaften Ausführungsform einer Lastausgleichsanordnung;
- Fig. 6: ein Diagramm mit Druck-Weg-Kennlinien zur Veranschaulichung einer Funktion der Lastausgleichsanordnung gemäß Fig. 5;
- Fig. 7: eine schematische Prinzipdarstellung einer weiteren Ausführungsform einer Lastausgleichsanordnung;
- Fig. 8: ein Diagramm mit Druck-Weg-Kennlinien zur Veranschaulichung einer Funktion der Lastausgleichsanordnung gemäß Fig. 7;
- Fig. 9: eine schematische Prinzipdarstellung noch einer weiteren Ausführungsform einer Lastausgleichsanordnung; und
- Fig. 10: ein Diagramm mit Kennlinien zur Veranschaulichung eines resultierenden Antriebsmoments (Getriebemoment) in Abhängigkeit von einem Verschwenkwinkel von Koppelgliedern eines Roboters zur Erläuterung einer Funktion der Lastausgleichsanordnung gemäß Fig. 9.

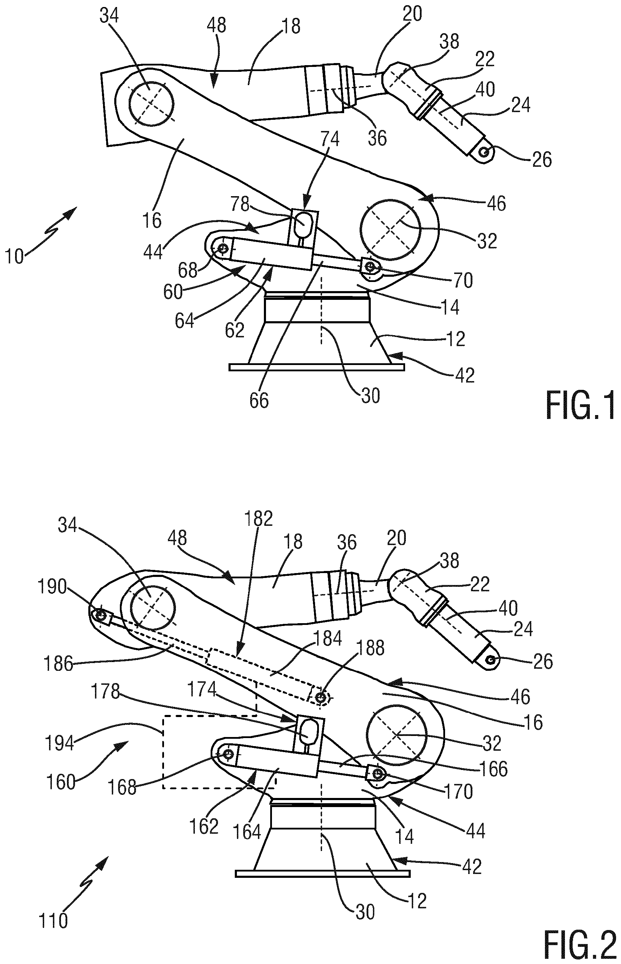

Mit Bezugnahme auf Fig. 1 sowie mit ergänzender Bezugnahme auf Fig. 2, Fig. 3 und Fig. 4 werden grundsätzliche Ausgestaltungen von Robotern sowie von Lastausgleichsanordnungen für Roboter erläutert.

Fig. 1 zeigt eine Seitenansicht eines Roboters 10, der etwa als Industrieroboter gestaltet ist. Der Roboter 10 ist als Gelenkarmroboter oder Knickarmroboter gestaltet. Der Roboter 10 weist eine serielle kinematische Kette auf.

Beispielhaft umfasst der Roboter 10 Koppelglieder 12, 14, 16, 18, 20, 22 und 24, die seriell miteinander gekoppelt sind. Jedes der Koppelglieder 12, 14, 16, 18, 20, 22, 24 ist relativ zu seinem/seinen benachbarten Koppelglied/Koppelgliedern beweglich, insbesondere verdrehbar oder verschwenkbar. Das erste Koppelglied 12 kann auch als Basis bezeichnet werden. Am letzten Koppelglied 24 ist ein Anschluss 26 vorgesehen, etwa für einen sogenannten Endeffektor. Die kinematische Kette kann um weitere Koppelglieder ergänzt werden. Am Anschluss 26 kann beispielsweise ein Manipulator in Form eines Greifers oder dergleichen aufgenommen werden.

Der Roboter 10 weist diverse (Bewegungs-)Achsen 30, 32, 34, 36, 38, 40 auf, die jeweils zwischen zwei der Koppelglieder 12, 14, 16, 18, 20, 22 und 24 ausgebildet sind. Die Achsen 30, 32, 34, 36, 38, 40 können auch als Antriebsachsen bezeichnet werden und mit Antrieben/Motoren versehen oder gekoppelt sein, etwa mit Elektromotoren. Den Achsen 30, 32, 34, 36, 38, 40 und den diesen zugeordneten Motoren können jeweils Getriebe zwischengeschaltet sein.

Die Achse 30 ist den Koppelgliedern 12, 14 zwischengeordnet und erlaubt eine Relativverschwenkung oder Relativverdrehung zwischen den Koppelgliedern 12, 14. Die Achse 32 ist den Koppelgliedern 14, 16 zwischengeordnet und erlaubt eine Relativverdrehung oder Relativverschwenkung zwischen den Koppelgliedern 14, 16. Die Achse 34 ist den Koppelgliedern 16, 18 zugeordnet und erlaubt eine Relativverdrehung und Relativverschwenkung zwischen den Koppelgliedern 16, 18. Die Achse 36 ist den Koppelgliedern 18, 20 zwischengeordnet und erlaubt eine Relativverdrehung oder Relativverschwenkung zwischen den Koppelgliedern 18, 20. Die Achse 38 ist den Koppelgliedern 20, 22 zwischengeordnet und erlaubt eine Relativverdrehung oder Relativverschwenkung zwischen den Koppelgliedern 20, 22. Die Achse 40 ist den Koppelgliedern 22, 24 zwischengeordnet und erlaubt eine Relativverdrehung oder Relativverschwenkung zwischen den Koppelgliedern 22, 24.

Bei dem anhand der Fig. 1 veranschaulichten Roboter 10 kann das Koppelglied 12 auch als Gestell 42 bezeichnet werden. Das Koppelglied 14 kann auch als Karussell 44 bezeichnet werden. Das Koppelglied 16 kann auch als Schwinge 46 bezeichnet werden. Das Koppelglied 18 kann auch als Arm 48 bezeichnet werden. Das Gestell 42 ist üblicherweise dazu ausgestaltet, den Roboter 12 bodenseitig zu fixieren. Gleichwohl sind auch Gestaltungen von Robotern 10 bekannt, die etwa deckenseitig oder an einer (seitlichen) Wand aufgenommen sind, je nach Anwendungsfall.

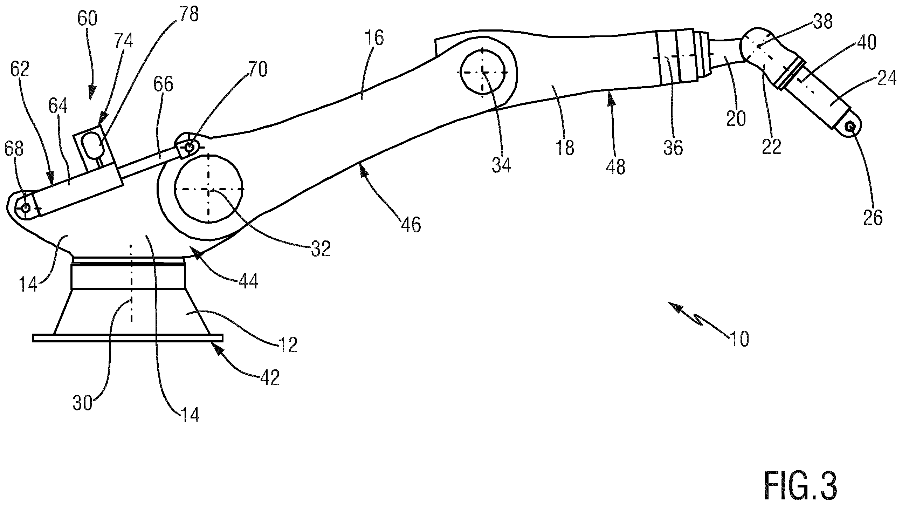

Der Roboter 10 gemäß Fig. 1 ist zu Veranschaulichungszwecken ferner in Fig. 3 gezeigt, wobei auch Fig. 3 eine seitliche Darstellung des Roboters 10 beinhaltet. Jedoch weist der Roboter 10 in Fig. 3 gegenüber dem Roboter 10 in Fig. 1 eine geänderte Orientierung auf, die insbesondere eine Relativverschwenkung der Schwinge 46 gegenüber dem Karussell 44 sowie eine Relativverschwenkung des Arms 48 gegenüber der Schwinge 46 umfasst. Der Roboter 10 ist in Fig. 1 in einer eingefahrenen/eingeklappten Stellung und in Fig. 3 in einer ausgefahrenen Stellung gezeigt.

Der Roboter 10 ist ferner mit einer Lastausgleichsanordnung 60 versehen, die gemäß der anhand der Fig. 1 veranschaulichten beispielhaften Ausgestaltung einen Hydraulikzylinder 62 umfasst, der ein Zylindergehäuse 64 und einen Kolben 66 aufweist, der in das Zylindergehäuse 64 eintaucht. Das Zylindergehäuse 64 und der Kolben 66 sind relativ zueinander translatorisch verfahrbar. Der Hydraulikzylinder 62 ist an einem Ende, beim Zylindergehäuse 64, über ein Lager bzw. einen Drehpunkt 68 mit dem Koppelglied 14, also mit dem Karussell 44 schwenkbar gekoppelt. Der Hydraulikzylinder 62 ist über ein weiteres Ende, das beim Kolben 66 vorgesehen ist, über ein Lager bzw. einen Drehpunkt 70 am Koppelglied 16, also an der Schwinge 46 aufgenommen. Die Drehpunkte 68, 70 sind jeweils exzentrisch zur bzw. radial versetzt von der Achse 32 angeordnet. Bei einer Relativverschwenkung zwischen den Koppelgliedern 14, 16 erfolgt eine Relativbewegung zwischen dem Kolben 66 und dem Zylindergehäuse 64. Auf diese Weise kann ein Fluid, insbesondere ein Hydrauliköl, in das Zylindergehäuse 64 einströmen bzw. aus dem Zylindergehäuse 64 verdrängt werden.

Die Lastausgleichsanordnung 60 umfasst ferner eine Speichereinheit 74, die zumindest einen Druckspeicher 78 umfasst. Die Speichereinheit 74 und der Druckspeicher 78 sind in Fig. 1 lediglich schematisch dargestellt. Der Druckspeicher ist beispielhaft als Membranspeicher, Blasenspeicher, Kolbenspeicher, Federspeicher und/oder gemäß einer anderen Speicherbauart gestaltet. Beispielhaft ist im Druckspeicher 78 ein gasförmiges Fluid aufgenommen, etwa Stickstoff oder dergleichen. Das gasförmige Fluid ist im Gegensatz zum Hydraulikfluid hochkompressibei, so dass das bei der Bewegung des Hydraulikzylinders 62 verdrängte Öl das gasförmige Fluid im Druckspeicher 78 unter Druck setzen kann. Auf diese Weise kann potentielle Energie oder kinetische Energie als Fluidenergie gespeichert werden.

Beim Übergang zwischen der eingeklappten Stellung gemäß Fig. 1 und der ausgeklappten Stellung gemäß Fig. 3 wird das Koppelglied 16 gegenüber dem Koppelglied 14 derart verschwenkt, dass der Kolben 66 zunächst tiefer in das Zylindergehäuse 64 eintaucht und, nach Überwindung einer maximalen Eintauchtiefe, wieder aus dem Zylindergehäuse 64 herausgefahren wird, wenn das Koppelglied 16 weiter verschwenkt wird.

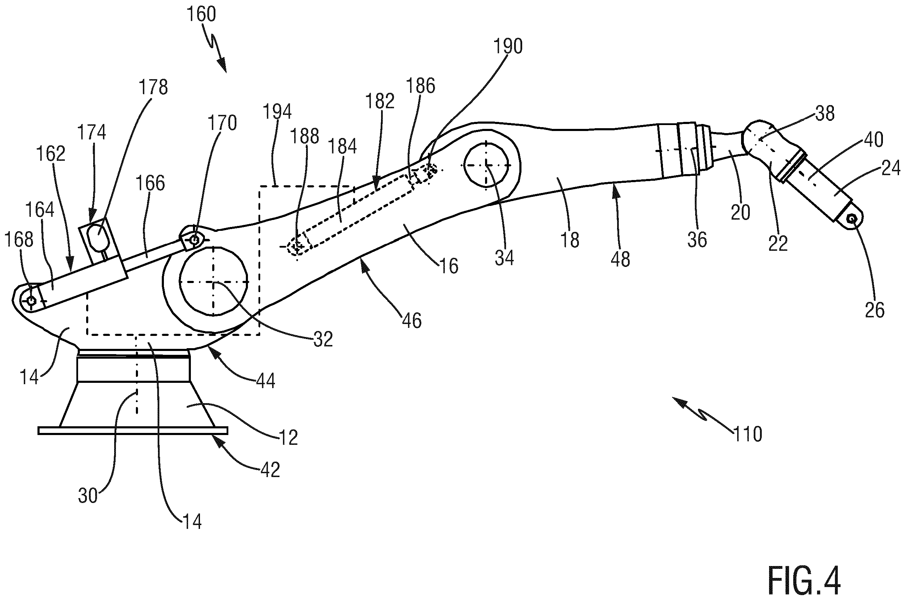

Mit Bezugnahme auf die Fig. 2 und 4 wird eine weitere Ausgestaltung eines insgesamt mit 110 bezeichneten Roboters veranschaulicht. Der Roboter 110 gemäß den Fig. 2 und 4 ist dem Roboter 10 gemäß den Fig. 1 und 3 grundsätzlich ähnlich gestaltet. Dies trifft grundsätzlich auf die Koppelglieder 12, 14, 16, 18, 20, 22, 24 sowie die diesen zugeordneten Achsen 30, 32, 34, 36, 38 und 40 zu. Auch beim Roboter 110 kann das Koppelglied 12 als Gestell 42 bezeichnet werden. Demgemäß kann das Koppelglied 14 als Karussell 44 bezeichnet werden. Das Koppelglied 16 kann als Schwinge 46 bezeichnet werden. Das Koppelglied 18 kann als Arm 48 bezeichnet werden.

Die in den Fig. 2 und 4 veranschaulichten Stellungen des Roboters 110 entsprechen im Wesentlichen den in den Fig. 1 und 3 veranschaulichten Stellungen des Roboters 10.

Auch der Roboter 110 ist mit einer Lastausgleichsanordnung versehen, die in den Fig. 2 und 4 mit 160 bezeichnet wird. Die Lastausgleichsanordnung 160 ist mit einem Hydraulikzylinder 162 versehen, dessen Gestaltung der Gestaltung des Hydraulikzylinders 62 gemäß den Fig. 1 und 3 grundsätzlich ähnlich ist.

Der Hydraulikzylinder 162 umfasst ein Zylindergehäuse 164 und einen Kolben 166. An seinem zylindergehäuseseitigen Ende ist der Hydraulikzylinder 162 über ein Lager bzw. einen Drehpunkt 168 am Koppelglied 14 aufgenommen. An einem kolbenseitigen Ende ist der Hydraulikzylinder 162 über ein Lager bzw. ein Drehpunkt 170 am Koppelglied 16 aufgenommen. Analog zur Lastausgleichsanordnung 60 ist auch die Lastausgleichsanordnung 160 mit einer Speichereinheit 174 versehen, die zumindest einen Druckspeicher 178 umfasst. Die Speichereinheit 174 ist dem Hydraulikzylinder 162 zugeordnet und insbesondere am Zylindergehäuse 164 aufgenommen.

Die Lastausgleichsanordnung 160 umfasst jedoch ferner einen zweiten Hydraulikzylinder 182. Der Hydraulikzylinder 182 ist in den Fig. 2 und 4 größtenteils gestrichelt dargestellt. Der Hydraulikzylinder 182 ist dem zweiten Koppelglied 16 und dem dritten Koppelglied 18 zugeordnet. In der beispielhaften Ansichtsorientierung, die den Fig. 2 und 4 zugrunde gelegt wird, wird der Hydraulikzylinder 182 zumindest abschnittsweise von dem zweiten Koppelglied 16 verdeckt.

Der Hydraulikzylinder 182 umfasst ein Zylindergehäuse 184 und einen Kolben 186, der in das Zylindergehäuse 184 eintauchen und aus dem Zylindergehäuse 186 ausfahren kann. Der Hydraulikzylinder 182 ist an seinem zylindergehäuseseitigen Ende über ein Lager oder einen Drehpunkt 188 am Koppelglied 16 aufgenommen. Der Hydraulikzylinder 182 ist an seinem kolbenseitigen Ende über einen Drehpunkt 190 am Koppelglied 18 aufgenommen.

Der Druckspeicher 178 oder ein zweiter Druckspeicher können grundsätzlich auch beim zweiten Hydraulikzylinder 182 vorgesehen sein. Gleichwohl ist die in den Fig. 2 und 4 gezeigte Konfiguration zumindest in einigen Ausführungsformen bevorzug.

Die Drehpunkte 168, 170 des Hydraulikzylinders 162 sind jeweils zur Achse 32 versetzt bzw. von dieser radial beabstandet. Die Drehpunkte 188, 190 des Hydraulikzylinders 182 sind jeweils von der Achse 34 versetzt bzw. radial von dieser beabstandet.

Der Hydraulikzylinder 182 ist gemäß der oben genannten beispielhaften Nomenklatur zwischen der Schwinge 46 und dem Arm 48 des Roboters 110 aufgenommen.

Wesentlich für die in Fig. 2 gezeigte beispielhafte Ausgestaltung ist, dass sich zwischen dem Hydraulikzylinder 162 und dem Hydraulikzylinder 182 eine Verbindungsleitung 194 erstreckt, die eine fluidische Kopplung zwischen den Hydraulikzylindern 162, 182 bewirkt. Die Verbindungsleitung 194 erstreckt sich beispielhaft vom Zylindergehäuse 164 zum Zylindergehäuse 184. Auf diese Weise sind die Hydraulikzylinder 162, 182 der Lastausgleichsanordnung 160 funktional miteinander gekoppelt.

Ein weiteres Merkmal der Lastausgleichsanordnung 160 gemäß Fig. 2 ist, dass bei einem Hydraulikzylinder 182, der zwischen dem Koppelglied 16 und dem Koppelglied 18 angeordnet ist, keine mit einem Druckspeicher versehene Speichereinheit vorgesehen ist. Stattdessen nutzt der Hydraulikzylinder 182 ebenso die Speichereinheit 174, die beim Hydraulikzylinder 162 vorgesehen ist. Zu diesem Zweck erstreckt sich die Verbindungsleitung 194 zwischen dem Hydraulikzylinder 182 und dem Hydraulikzylinder 162, insbesondere zwischen den Zylindergehäusen 164, 184.

Ein Vorteil der in den Fig. 2 und 4 veranschaulichten Ausgestaltung der Lastausgleichsanordnung 160 ist, dass beim zweiten Hydraulikzylinder 182 selbst eben keine separate Speichereinheit 174 mit zumindest einem Druckspeicher 178 vorgesehen ist. Dies vermeidet eine Erhöhung der trägen Massen, die von der Achse 32 bzw. vom Antriebsmotor der Achse 32 überwunden werden muss, um das Koppelglied 16 und die folgenden Koppelglieder 18, 20, 22, 24 relativ zum Koppelglied 14 zu verschwenken. Ferner ist kein weiterer Aufwand für diese Komponenten erforderlich.

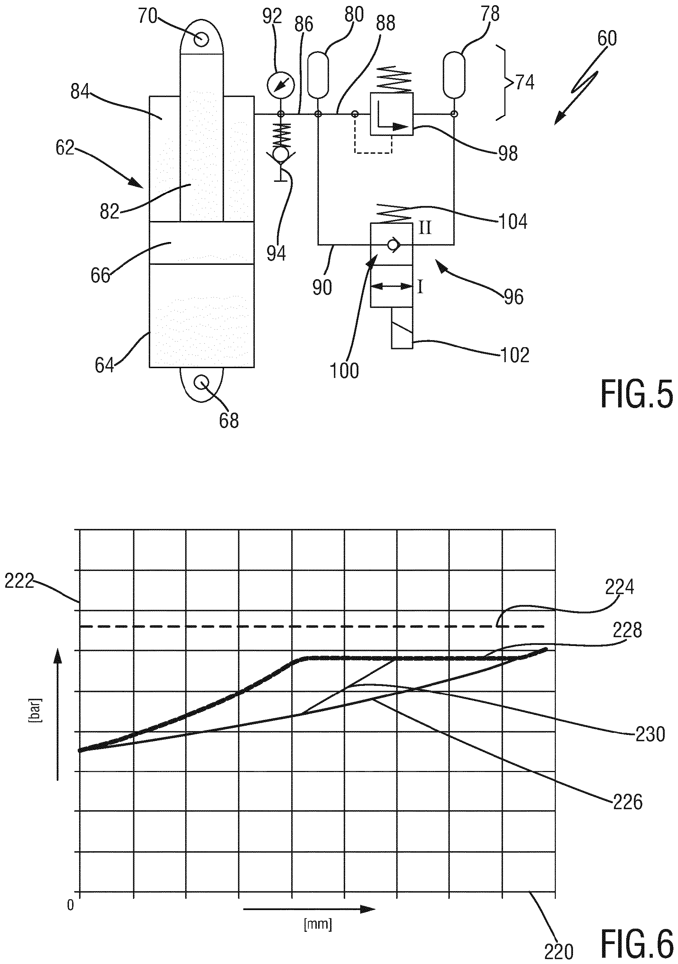

Mit Bezugnahme auf die Fig. 5 bis 10 werden verschiedene beispielhafte Ausgestaltungen von Lastausgleichsanordnungen beschrieben, die grundsätzlich miteinander kombinierbar sind.

Fig. 5 veranschaulicht anhand einer schematischen Darstellung eine Lastausgleichsanordnung 60, die etwa der anhand der Fig. 1 und 3 veranschaulichten Konfiguration des Roboters 10 entsprechend gestaltet ist.

Die Lastausgleichsanordnung 60 ist mit einem Hydraulikzylinder 62 versehen, der ein Zylindergehäuse 64 und einen darin aufgenommenen Kolben 66 umfasst. Über Lager bzw. Drehpunkte 68, 70 kann der Hydraulikzylinder 62 an den Koppelgliedern 14, 16 aufgenommen werden. Wie vorstehend bereits ausgeführt, ist ferner eine Speichereinheit 74 vorgesehen, die zumindest einen Druckspeicher 78 umfasst, der mit dem Hydraulikzylinder 62 gekoppelt ist. Fig. 5 zeigt auch, dass ferner zumindest ein weiterer Druckspeicher 80 vorgesehen sein kann.

Der Kolben 66 des Hydraulikzylinders 62 umfasst eine Kolbenstange 82. Im Zylindergehäuse 64 ist ein Ringraum oder Zylinderraum 84 definiert, in den eine Verbindungsleitung 86 mündet. Gemäß der anhand Fig. 5 veranschaulichten Gestaltung des Hydraulikzylinders 62 mündet die Verbindungsleitung 86 in einem rückwärtigen Bereich des Kolbens 66 in den Zylinderraum 84. Dies hat zur Folge, dass beim Ausfahren des Kolbens 66 aus dem Zylindergehäuse 64 das darin aufgenommene Fluid verdrängt bzw. komprimiert wird. Beim Einfahren des Kolbens 66 in das Zylindergehäuse 64 kann das Fluid nachströmen.

Die Verbindungsleitung 86 erstreckt sich zwischen dem Hydraulikzylinder 62 und einer ersten Leitung 88 und einer zweiten Leitung 90. Die erste Leitung 88 kann auch als erster Fluidpfad bezeichnet werden. Die zweite Leitung 90 kann auch als zweiter Fluidpfad bezeichnet werden.

Die erste Leitung 88 und die zweite Leitung 90 erstrecken sich (schaltungstechnisch) parallel zueinander und münden beide in den Druckspeicher 78 der Speichereinheit 74. Ferner ist der Druckspeicher 80 mit der Verbindungsleitung 86 gekoppelt. Die erste Leitung 88 und die zweite Leitung 90 erstrecken sich jeweils beispielhaft zwischen der Verbindungsleitung 86 bzw. dem Druckspeicher 80 und dem Druckspeicher 78. Die Lastausgleichsanordnung 60 umfasst ferner beispielhaft einen Drucksensor 92 (z.B. ein Manometer), der an die Verbindungsleitung 86 ankoppelt. Beispielhaft ist ferner ein Befüllventil 94 vorgesehen, das ebenso an die Verbindungsleitung 86 ankoppelt.

Ferner umfasst die Lastausgleichsanordnung 60 eine Steuereinheit 96, die der zweiten Leitung 90 zugeordnet ist. Die Steuereinheit 96 ist dazu ausgestaltet, einen Durchfluss des vom Kolben 66 verdrängten Fluids durch die erste Leitung 88 und/oder die zweite Leitung 90 zu steuern.

In der ersten Leitung 88 ist beispielhaft ein Druckventil 98 vorgesehen, das in Abhängigkeit von definierten Druckschwellen schaltet. Bei der zweiten Leitung 90 ist hingegen ein ansteuerbares Ventil 100 vorgesehen, das über die Steuereinheit 96 angesteuert wird. Das ansteuerbare Ventil 100 ist beispielhaft gemäß der in Fig. 5 gezeigten Ausgestaltung als 2/2-Wegeventil ausgeführt. Andere Gestaltungen des ansteuerbaren Ventils 100 sind ohne weiteres vorstellbar. In Fig. 5 sind zwei Schaltstellungen des Ventils 100 beispielhaft mit I und II bezeichnet. Die Schaltstellungen I und II entsprechen einem ersten Betriebszustand und einem zweiten Betriebszustand des Ventils 100, die mit einem ersten Betriebsmodus und einem zweiten Betriebsmodus der Lastausgleichsanordnung 60 verknüpft sind.

Dem ansteuerbaren Ventil 100 ist ein Ventilaktuator 102 zugeordnet, der etwa als Elektromagnet gestaltet sein kann. Ferner ist ein Rückstellelement 104, etwa in Form einer Feder, vorgesehen.

Mit ergänzender Bezugnahme auf Fig. 6 wird die Funktion der Lastausgleichsanordnung 60 näher erläutert.

Fig. 6 veranschaulicht einen Zusammenhang zwischen einem Systemdruck in der Lastausgleichsanordnung 60, der etwa über den Drucksensor 92 messbar ist, sowie einem zurückgelegten Weg des Kolbens 66 in Bezug auf das Zylindergehäuse 64. Der Weg kann auch als Zylinderhub bezeichnet werden.

Auf einer mit 220 bezeichneten Achse ist der Weg qualitativ [beispielsweise in mm (Millimetern)] aufgetragen. Auf einer mit 222 bezeichneten Achse ist der Systemdruck qualitativ [beispielsweise in bar] aufgetragen. Eine mit 224 bezeichnete Linie veranschaulicht beispielhaft einen maximalen Betriebsdruck, der nicht überschritten werden sollte.

Eine mit 226 bezeichnete Linie veranschaulicht eine Druck-Weg-Charakteristik der Lastausgleichsanordnung im ersten Betriebszustand des Ventils 100, also wenn das Ventil 100 geöffnet ist. Eine mit 228 bezeichnete Linie veranschaulicht einen Systemdruck in der Lastausgleichsanordnung 60, wenn das Ventil 100 im zweiten Betriebszustand betrieben wird, also nach Art eines Rückschlagventils. Ferner veranschaulicht eine mit 230 bezeichnete Kurve einen beispielhaften Druck-Weg-Verlauf beim Einfahren des Kolbens 66, also beim Nachströmen des Fluids in den Ringraum 84.

In Fig. 5 befindet sich das Ventil 100 beispielhaft im nicht-bestromten Zustand in der Stellung II. In diesem zweiten Betriebsmodus wirkt das Ventil 100 als Rückschlagventil, das einen Durchtritt des Fluids über die zweite Leitung 90 in Richtung auf den Druckspeicher 78 unterbindet. Wird nun in diesem zweiten Betriebszustand der Kolben 66 derart relativ zum Zylindergehäuse 64 verfahren, dass das darin aufgenommene Fluid verdrängt bzw. unter Druck gesetzt wird, so strömt das Fluid zunächst über die Verbindungsleitung 86 in den Druckspeicher 80.

Solange im zweiten Betriebsmodus (Betriebszustand II) vorrangig der Druckspeicher 80 befüllt und unter Druck gesetzt wird, verläuft die zugehörige Kurve 228 deutlich steiler als die Kurve 226, die dem Betriebszustand I entspricht.

Sofern und sobald jedoch ein definiertes Druckniveau erreicht wird, in Fig. 6 beispielsweise ein Systemdruck von ca. 290 bar, öffnet das Druckventil 98 in der ersten Leitung 88, so dass auch der Druckspeicher 78 befüllt werden kann. Das Druckventil 98 sorgt jedoch dafür, dass bei sich weiter erhöhendem Zylinderhub zunächst keine weitere Erhöhung des Systemdrucks auftritt. Erst dann, wenn der Druck im Druckspeicher 78 jenem Schwellwert und somit auch dem Druck im Druckspeicher 80 entspricht, kann der Systemdruck insgesamt weiter ansteigen.

Mit anderen Worten weist die Kurve 228 ein deutlich ausgeprägtes Plateau auf. Je nachdem, wie das Druckventil 98 angesteuert wird, kann anstelle des Plateaus der Kurve 228 auch ein anderer Verlauf herbeigeführt werden.

Ein Vorteil des Betriebsmodus II, der auch als Boost-Modus bezeichnet werden kann, liegt in der Krafterhöhung bei geringen (Hub-) Wegen. Auf diese Weise kann je nach aktuellem Anwendungsfall und aktueller Last am Roboter 10 das erforderliche Haltemoment bzw. Antriebsmoment an der Achse (etwa Achse 32) reduziert werden.

Beim Druckabbau, also wenn gemäß der in Fig. 5 gezeigten Ausgestaltung der Kolben 66 in das Zylindergehäuse 64 einfährt, verhält sich die Druck-Weg-Kennlinie im zweiten Betriebsmodus etwas anders, vergleiche die Kurve 230 in Fig. 6. Ursächlich hierfür ist die Gestaltung des ansteuerbaren Ventils 100 als Rückschlagventil, wodurch ein Rückfluss des Fluids aus dem Druckspeicher 78 in Richtung auf den Hydraulikzylinder 62 ermöglicht ist, wenn der Druck am oder im Druckspeicher 80 niedriger als der Druck am oder im Druckspeicher 78 ist.

Die genaue Lage der Kurve 230 ist dabei davon abhängig, auf welchem Punkt des Plateaus , also bei welchem Zylinderhub, der Druckabbau beginnt. Solange nämlich der Druck im Druckspeicher 80 noch höher als der Druck im Druckspeicher 78 ist, kann kein Fluid über das Rückschlagventil zurückströmen. Sobald jedoch der Druck beim Druckspeicher 80 bzw. im Zylinder 62 niedriger als im Druckspeicher 78 ist, kann das Rückschlagventil beim ansteuerbaren Ventil 100 überwunden werden.

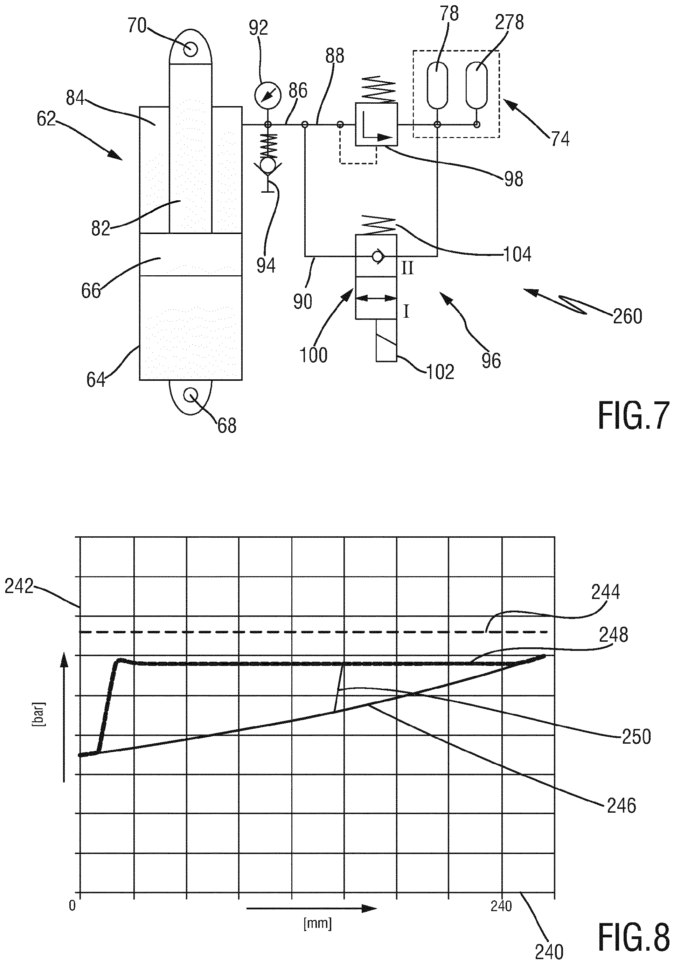

Ergänzend wird auf die Fig. 7 und 8 Bezug genommen. Fig. 7 veranschaulicht eine mit 260 bezeichnete Lastausgleichsanordnung. Fig. 8 zeigt in einem Druck-Weg-Diagramm analog zu Fig. 6 entsprechende charakteristische Kennlinien. Den Diagrammdarstellungen in Fig. 6 und Fig. 8 liegen gleiche Maßstäbe zugrunde.

Im Hinblick auf die Detailgestaltung unterscheidet sich die Lastausgleichanordnung 260 gemäß Fig. 7 von der Lastausgleichsanordnung 60 gemäß Fig. 5 dadurch, dass zwischen der ersten Leitung 88 bzw. der zweiten Leitung 90 und dem Hydraulikzylinder 62 kein Druckspeicher an die Verbindungsleitung 86 ankoppelt. Stattdessen umfasst die Speichereinheit 74 beispielhaft zwei Druckspeicher 78, 278, die miteinander gekoppelt sind. Es versteht sich, dass die Ausgestaltung gemäß Fig. 6 auch mit lediglich einem Druckspeicher 78 denkbar ist.

Fig. 8 veranschaulicht auf einer Achse 240 qualitativ einen Zylinderhub [beispielsweise in mm]. Eine Achse 242 veranschaulicht qualitativ einen Systemdruck [beispielsweise in bar]. Mit 244 ist eine Linie bezeichnet, die einen maximalen Betriebsdruck kennzeichnet.

Eine mit 246 bezeichnete Linie veranschaulicht eine Druck-Weg-Charakteristik der Lastausgleichsanordnung 260 im ersten Betriebsmodus, der dem ersten Betriebszustand des ansteuerbaren Ventils 100 (Stellung I) entspricht. Sofern die entsprechenden Komponenten der Lastausgleichsanordnungen 60, 260 in den Fig. 5 und 6 gleich ausgelegt sind (und der Druckspeicher 278 abgesehen von seiner Lage im System etwa dem Druckspeicher 80 entspricht), entspricht die Kurve 246 in Fig. 8 der Kurve 226 in Fig. 6.

Fig. 8 zeigt ferner anhand einer Kurve 248 einen Systemdruck der Lastausgleichsanordnung 260 im zweiten Betriebsmodus. Eine mit 250 bezeichnete Kurve veranschaulicht eine entsprechend Druck-Weg-Kennlinie im zweiten Betriebsmodus, wenn das Fluid in den Hydraulikzylinder 62 zurückgedrängt wird.

Gemäß der gezeigten beispielhaften Anordnung und Ausgestaltung des Hydraulikzylinders 62 entspricht die Kurve 248 einer Ausfahrbewegung. Die Kurve 250 entspricht einer Einfahrbewegung.

Die Kurve 248 verläuft im Bereich ihrer Steigung wesentlich steiler als die entsprechende Kurve 228 in Fig. 6. Dies geht im Wesentlichen darauf zurück, dass neben den Druckspeichern 78, 278 kein weiterer Druckspeicher oder Puffer vorgesehen ist, der direkt mit dem Zylindergehäuse 64 gekoppelt ist. Eine Restkompressibilität ist jedoch vorhanden und kann etwa auf die Ölkompressibilität, Leitungselastizitäten und dgl. zurückgehen. Es versteht sich, dass je nach Wahl und Gestaltung des Druckspeichers 80 (Fig. 5) andere Steigungsverläufe bei den Kennlinien 228, 248 bewirkt werden können.

Sobald jedoch der Druck im zweiten Betriebsmodus einen Schwellwert erreicht hat, öffnet das Druckventil 98, wodurch das Fluid in die Speichereinheit 74 einströmen kann, um den oder die Druckspeicher 78, 278 unter Druck zu setzen.

Der Druckabbau bei der Einfahrbewegung verhält sich grundsätzlich ähnlich wie bei der anhand der Fig. 5 und 6 veranschaulichten Ausführungsform.

Das Fluid (Hydrauliköl) kann erst dann von dem oder den Druckspeicher(n) 78, 278 zurück in den Hydraulikzylinder 62 strömen, wenn der Druck im System zwischen dem Hydraulikzylinder und dem ansteuerbaren Ventil 100, der etwa durch den Drucksensor 92 messbar ist, niedriger als der Druck in dem oder den Druckspeicher(n) 78, 278 ist.

Es versteht sich, dass auch die als Ausgleichsanordnung 260 gemäß Fig. 7 im ersten Betriebsmodus betreibbar ist, wenn sich das ansteuerbare Ventil 100 im ersten Betriebszustand (Stellung I) befindet. Dann ist der Druckspeicher 78 und, sofern vorhanden, der Druckspeicher 278 direkt fluidisch mit dem Hydraulikzylinder 62 verbunden, so dass überall im System im Wesentlichen der gleiche Systemdruck herrscht.

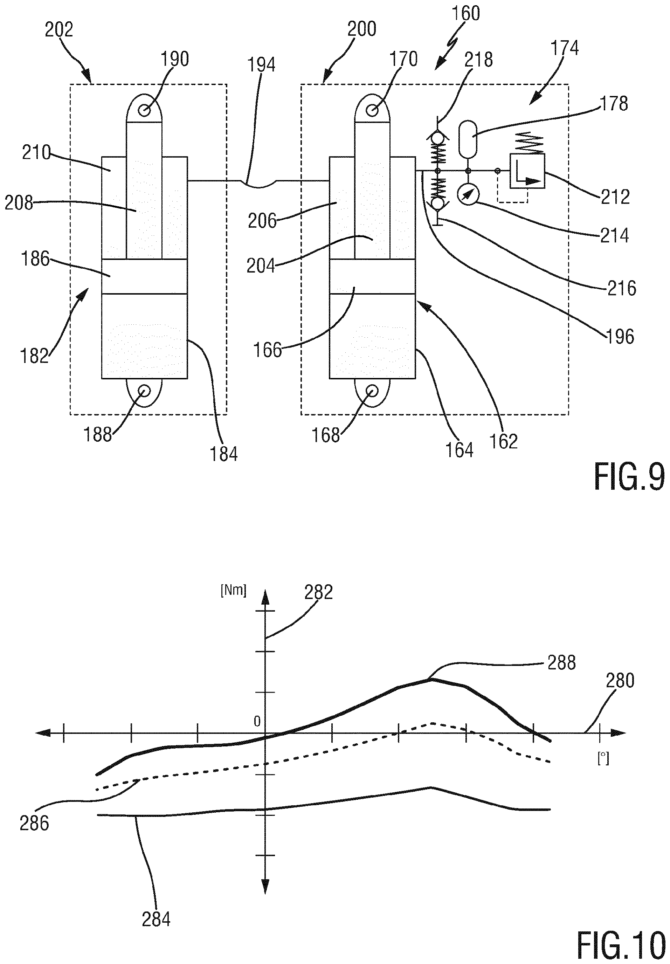

Mit Bezugnahme auf Fig. 9 und Fig. 10 wird eine beispielhafte Ausgestaltung der Lastausgleichsanordnung 160 veranschaulicht, die grundsätzlich in der in den Fig. 2 und 4 gezeigten Konfigurationen des Roboters 10 verwendbar ist. Diese Ausgestaltung ist als eigenständige Vorrichtung ohne alle Merkmale des Anspruchs 1 nicht Teil der Erfindung.

Analog zur anhand der Fig. 2 und 4 veranschaulichten Ausgestaltung weist die Lastausgleichsanordnung 160 gemäß Fig. 9 neben dem Hydraulikzylinder 162 einen weiteren Hydraulikzylinder 182 auf. Der Hydraulikzylinder 162 umfasst ein Zylindergehäuse 164, in dem ein Kolben 166 aufgenommen ist. Über Lager oder Drehpunkte 168, 170 kann der Hydraulikzylinder 162 an den Koppelgliedern 14, 16 aufgenommen werden. Dem Hydraulikzylinder 162 ist eine Speichereinheit 174 zugeordnet, die zumindest einen Druckspeicher 178 umfasst.

Der Hydraulikzylinder 182 umfasst ein Zylindergehäuse 184 sowie einen Kolben 186, der im Zylindergehäuse 184 aufgenommen ist. Über Lager oder Drehpunkte 188, 190 ist der Hydraulikzylinder 182 an den Koppelgliedern 16, 18 aufnehmbar. Über eine mit 196 bezeichnete Verbindungsleitung ist der Druckspeicher 178 der Speichereinheit 174 mit dem Zylindergehäuse 164 des Hydraulikzylinders 162 gekoppelt.

Der Hydraulikzylinder 162 kann auch als Master-Zylinder 200 bezeichnet werden. Der Hydraulikzylinder 182 kann auch als Slave-Zylinder 202 bezeichnet werden. Der Slave-Zylinder 202 ist mit dem Master-Zylinder 200 über die Verbindungsleitung 194 gekoppelt. Der Master-Zylinder 200 ist ferner mit dem Druckspeicher 178 gekoppelt. Die Anordnung der Lastausgleichsanordnung 160 mit dem Master-Zylinder 200 und dem Slave-Zylinder 202 kann als Twin-Anordnung bezeichnet werden.

Der Hydraulikzylinder 162 umfasst ferner eine Kolbenstange 204 und einen Ringraum 206 zwischen dem Kolben 166 und dem Zylindergehäuse 164. Der Ringraum 206 wird durch eine rückwärtige Seite des Kolbens 166 begrenzt. Der Hydraulikzylinder 182 umfasst eine Kolbenstange 208, die von einem Ringraum 210 umgeben wird, der sich zwischen dem Kolben 186 und dem Zylindergehäuse 184 erstreckt und von einer rückwärtigen Seite des Kolbens 186 begrenzt wird.

Die Verbindungsleitung 194 mündet jeweils in die Ringräume 206, 210 der Hydraulikzylinder 162, 182. Auch wenn dies in Fig. 9 nicht maßstabsgetreu dargestellt ist, kann es gemäß zumindest beispielhafter Ausgestaltungen von Vorteil sein, wenn Master-Zylinder 200 eine Wirkfläche aufweist, die größer als eine Wirkfläche des Slave-Zylinders 202 ist. Die Wirkflächen der Zylinder 200, 202 sind beispielhaft die Ringflächen an den rückwärtigen Seiten der Kolben 166, 186, mit denen auf das Fluid (Hydrauliköl) eingewirkt wird.

Beim Master-Zylinder ist ferner ein Druckventil 212 vorgesehen, das etwa als Überdruckventil gestaltet sein kann. Ferner ist ein mit 214 bezeichneter Drucksensor zur Erfassung des Systemdrucks vorgesehen. Ein mit 216 bezeichneter Anschluss kann beispielhaft als Befüllanschluss gestaltet sein. Ein mit 218 bezeichneter Anschluss kann beispielshaft als Entlüftungsanschluss gestaltet sein.

Die Kolben 166, 186 können gleichläufig, aber auch gegenläufig verfahren werden, je nachdem, welche Bewegung die Koppelglieder des Roboters 110 gerade ausführen. Sofern in den Hydraulikzylindern 182, 162 insgesamt das Fluid (Hydrauliköl) verdrängt wird, strömt dieses in Richtung auf den Druckspeicher 178 der Speichereinheit 174. Auf diese Weise kann kinetische und/oder potentielle Energie in Form von fluidischer Energie gespeichert und bei Bedarf abgegeben werden.

Fig. 10 veranschaulicht anhand verschiedener Schwenkwinkel-Momenten-Kennlinien die Funktion der Lastausgleichsanordnung 160. Eine mit 280 bezeichnete Achse veranschaulicht qualitativ einen Bereich denkbarer Winkellagen [beispielsweise in ° (Grad)] zwischen den Koppelgliedern 16, 18, die um die Achse 34 relativ zueinander verschwenkbar sind, vergleiche auch Fig. 2 und Fig. 4. Der linke, negative Winkel-Bereich der Achse 280 entspricht etwa der in Fig. 4 gezeigten Stellung. Der positive, rechte Bereich der Achse 280 entspricht etwa der in Fig. 2 gezeigten eingefahrenen Stellung des Roboters 110.

Die Achse 282 veranschaulicht qualitativ ein erforderliches Getriebemoment [beispielsweise in Nm (Newtonmeter)] bei der Achse 34 bzw. bei einer dieser zugeordneten Antriebseinheit, die etwa einen Motor und ein Getriebe umfassen kann, um eine definierte Last bewegen zu können.

Mit 284, 286, 288 bezeichnete Kurven veranschaulichen das erforderliche Getriebemoment bei einer bestimmten Bewegung, die etwa jeweils dem Übergang von der in Fig. 2 gezeigten Stellung des Roboters 110 zur in Fig. 4 gezeigten Stellung entspricht.

Das erforderliche Getriebemoment, das durch die Achse 282 veranschaulicht wird, kann positive und negative Werte aufweisen. Dies bezieht sich auf entsprechende Drehrichtungen. Der Einfachheit halber kann grundsätzlich auch der Betrag des Getriebemoments herangezogen werden.

Eine mit 284 bezeichnete Kurve veranschaulicht einen Roboter, der keinen Slave-Zylinder 202, also keinen Hydraulikzylinder 182 aufweist, der den Koppelgliedern 16, 18 zugeordnet ist, um Kräfte und Momente um die Achse 34 zu kompensieren. Es sind (betragsmäßig) relativ hohe Getriebemomente erforderlich, um die Bewegung bei gegebener Last ausführen zu können.

Die Kurve 286 zeigt, dass die gleiche Bewegung mit der gleichen Last mit deutlich geringerem erforderlichen Getriebemoment möglich ist, wenn die Lastausgleichsanordnung um einen Slave-Zylinder 202 bzw. Hydraulikzylinder 182 gemäß Fig. 9 ergänzt wird, der etwa gemäß den Fig. 2 und 4 mit den Koppelgliedern 16, 18 verbunden ist. Diese Konfiguration kann auch als Twin-System bezeichnet werden.

Eine mit 288 bezeichnete Kurve veranschaulicht, dass eine weitere Verschiebung der Kurve für das erforderliche Getriebemoment ermöglicht ist, wenn die Lastausgleichsanordnung 160, die einen Master-Zylinder 200 und einen Slave-Zylinder 202 aufweist, etwa gemäß Fig. 9, mit einem Boost-System, etwa gemäß den Fig. 5 oder 7 kombiniert wird, wobei das Boost-System dem Master-Zylinder 200 zugeordnet wird.

Es versteht sich, dass die Ausgestaltungen der Lastausgleichsanordnungen gemäß den Fig. 5 und 9 bzw. gemäß den Fig. 7 und 9 ohne weiteres miteinander kombinierbar sind, da je nach Anwendungsfall und aktuellem Lastzustand des Roboters synergistische Effekte auftreten. Das Twin-System und das Boost-System können miteinander kombiniert werden.

Demgemäß kann der Master-Zylinder 200 der Lastausgleichsanordnung 160 gemäß Fig. 9 mit einer Gestaltung gemäß den Fig. 5 bzw. 7 kombiniert werden, bei der zumindest ein Druckspeicher 78 über eine Anordnung umfassend eine erste Leitung 88, eine zweite Leitung 90 angesteuert wird, wobei in der ersten Leitung 88 ein Druckventil 98 und in der zweiten Leitung 90 an ansteuerbares Ventil 100 vorgesehen ist, das über eine Steuereinheit 96 in einem ersten Betriebszustand und einem zweiten Betriebszustand betreibbar ist.

Umgekehrt können die Ausgestaltungen der Lastausgleichsanordnungen 60 gemäß Fig. 5 sowie 260 gemäß Fig. 7 ohne weiteres um einen Slave-Zylinder 202 gemäß der in Fig. 9 veranschaulichten Ausgestaltung der Lastausgleichsanordnung 160 ergänzt werden, wobei ebenso eine Verbindungsleitung 194 zwischen den dann zwei Hydraulikzylindern vorgesehen ist.

## Patentansprüche

1. Fluidische Lastausgleichsanordnung für einen mehrachsigen Roboter (10), der zumindest zwei gelenkig miteinander verbundene Koppelglieder (14, 16) aufweist, wobei die Lastausgleichsanordnung Folgendes aufweist: wobei die Steuereinheit (96) einem ersten Fluidpfad (88) und einem zweiten Fluidpfad (90) zwischen dem Hydraulikzylinder (62) und dem zumindest einen Druckspeicher (78) zugeordnet ist,
wobei im ersten Fluidpfad (88) zwischen dem Hydraulikzylinder (62) und dem zumindest einen Druckspeicher (78) ein Druckventil (98) vorgesehen ist,
wobei sich zwischen dem Hydraulikzylinder (62) und dem ersten Fluidpfad (88) sowie dem zweiten Fluidpfad (90) eine Verbindungsleitung (86) erstreckt, und wobei beim zweiten Fluidpfad (90) ein ansteuerbares Ventil (100) vorgesehen ist, das in einem ersten Betriebszustand und einem zweiten Betriebszustand betreibbar ist, um wahlweise eine Fluidströmung durch den ersten Fluidpfad oder den zweiten Fluidpfad zu erlauben.

2. Lastausgleichsanordnung nach Anspruch 1, wobei der zweite Fluidpfad (90) im ersten Betriebszustand geöffnet ist, und wobei der zweite Fluidpfad (90) im zweiten Betriebszustand richtungsabhängig gesperrt ist.

3. Lastausgleichsanordnung nach Anspruch 1 oder 2, wobei im zweiten Betriebszustand ein Rückfluss von dem zumindest einen Druckspeicher (78) zum Hydraulikzylinder (62) über den zweiten Fluidpfad (90) ermöglicht ist, wenn ein aktueller Druck auf Seiten des zumindest einen Druckspeichers (78) größer als ein aktueller Systemdruck auf Seiten des Hydraulikzylinders (62) ist.

4. Lastausgleichsanordnung nach einem der vorhergehenden Ansprüche, wobei zwischen der Steuereinheit (96) und dem Hydraulikzylinder (62) zumindest ein weiterer Druckspeicher (80) ausgebildet ist, wobei eine Verbindungsleitung (86) zwischen der Steuereinheit (96) und dem Hydraulikzylinder (62) an den weiteren Druckspeicher (80) ankoppelt.

5. Lastausgleichsanordnung nach Anspruch 4, wobei der Druckspeicher (78) als Ergänzungsdruckspeicher ausgebildet ist, wobei der weitere Druckspeicher (80) als Basisdruckspeicher ausgebildet ist, wobei der Basisdruckspeicher und der Ergänzungsdruckspeicher im ersten Betriebszustand im Wesentlichen parallel geschaltet sind, und wobei der Ergänzungsdruckspeicher im zweiten Betriebszustand in Abhängigkeit von einem aktuellen Systemdruck zugeschaltet wird.

6. Lastausgleichsanordnung nach Anspruch 5, wobei im zweiten Betriebszustand des ansteuerbaren Ventils (100), bei einer Erhöhung des Systemdrucks, der erste Fluidpfad (88) geschlossen ist, wenn der Systemdruck ein definiertes Druckniveau unterschreitet, wobei der erste Fluidpfad (90) durch das Druckventil (98) geöffnet ist, wenn der Systemdruck das definierte Druckniveau erreicht, und wobei das ansteuerbare Ventil (100) als Rückschlagventil agiert.

7. Lastausgleichsanordnung nach einem der vorhergehenden Ansprüche, wobei die Druck-Weg-Kennlinie der Lastausgleichsanordnung im ersten Betriebszustand einen im Wesentlichen knickfreien Verlauf aufweist, und wobei die Druck-Weg-Kennlinie der Lastausgleichsanordnung im zweiten Betriebszustand eine Rampe mit größerer Steigung als eine mittlere Steigerung der Druck-Weg-Kennlinie der Lastausgleichsanordnung im ersten Betriebszustand sowie einen im Wesentlichen konstanten Abschnitt aufweist.

8. Lastausgleichsanordnung nach einem der vorhergehenden Ansprüche, wobei die Druck-Weg-Kennlinie der Lastausgleichsanordnung im zweiten Betriebszustand einen richtungsabhängigen Verlauf aufweist, wobei die Druck-Weg-Kennlinie beim Druckaufbau bei einem Weg-Wert ein Druck-Plateau erreicht, der geringer als ein Weg-Wert ist, bei dem die Druck-Weg-Kennlinie beim Druckabbau das Druck-Plateau verlässt.

9. Lastausgleichsanordnung nach einem der vorhergehenden Ansprüche, wobei das ansteuerbare Ventil (100) im zweiten Betriebszustand nach Überschreiten einer Druckschwelle im Systemdruck als Rückschlagventil agiert.

10. Lastausgleichsanordnung nach einem der vorhergehenden Ansprüche, wobei das ansteuerbare Ventil (100) im zweiten Fluidpfad (90) mit einem Aktuator (102) versehen ist, mit dem das Ventil (100) ansteuerbar ist.

11. Lastausgleichsanordnung nach Anspruch 10, wobei der Aktuator (102) ein Elektromagnet ist.

12. Lastausgleichsanordnung nach einem der vorhergehenden Ansprüche, wobei die Lastausgleichsanordnung für einen mehrachsigen Roboter vorgesehen ist, der zumindest drei gelenkig miteinander verbundene Koppelglieder (14, 16, 18) aufweist, wobei der Hydraulikzylinder (62) als erster Hydraulikzylinder (162) ausgebildet ist, wobei die Lastausgleichsanordnung ferner Folgendes aufweist:
- einen zweiten Hydraulikzylinder (182), der an zwei zueinander beweglichen Koppelgliedern befestigbar ist, wobei ein erstes Ende des zweiten Hydraulikzylinders (182) mit dem zweiten Koppelglied (16) und ein zweites Ende mit einem dritten Koppelglied (18) verbindbar ist,
wobei der erste Hydraulikzylinder (162) als Master-Zylinder (200) und der zweite Hydraulikzylinder (182) als Slave-Zylinder (202) gestaltet ist,
wobei der Master-Zylinder (200) mit einem Druckspeicher (178) zur Speicherung fluidischer Energie gekoppelt ist, und
wobei der Master-Zylinder (200) und der Slave-Zylinder (202) fluidisch miteinander gekoppelt sind.

13. Roboter, insbesondere Industrieroboter in Form eines Gelenkarmroboters, mit einer Lastausgleichsanordnung (60) nach einem der vorhergehenden Ansprüche, die zwei gelenkig miteinander verbundenen Koppelgliedern (14, 16) des Roboters zugeordnet ist.

14. Roboter nach Anspruch 13, wobei die Lastausgleichsvorrichtung (60) einem als Karussell (44) ausgebildeten Koppelglied (14) und einem als Schwinge (46) ausgebildeten Koppelglied (16) zugeordnet ist, wobei der Hydraulikzylinder (62) gelenkig an Drehpunkten (68, 70) aufgenommen ist, die von einer Rotationsachse (32) zwischen den beiden Koppelgliedern (14, 16) radial beabstandet sind.

15. Roboter nach Anspruch 14, wobei der Hydraulikzylinder (62) derart angeordnet ist, dass sich bei einer maximalen Relativbewegung zwischen dem Karussell (44) und der Schwinge (46) beim Hydraulikzylinder (62) sowohl eine Einfahrbewegung als auch eine Ausfahrbewegung ergibt.

## Claims

1. A fluidic load balancing arrangement for a multi-axis robot (10) that comprises at least two coupling elements (14, 16) that are connected by an articulated joint, wherein the load balancing arrangement comprises the following:
- a hydraulic cylinder (62) that is attachable to two coupling elements (14, 16) that are moveable with respect to one another, wherein a first end of the hydraulic cylinder (62) is connectable with a first coupling element (14) and a second end is connectable with a second coupling element (16),
- at least one pressure reservoir (78) that is arranged to be coupled with the hydraulic cylinder (62), and
- a control unit (96) that is arranged between the hydraulic cylinder (62) and the at least one pressure reservoir (78) to fluidically couple the hydraulic cylinder (62) and the at least one pressure reservoir (78) with one another,
wherein the control unit (96) is associated with a first fluid path (88) and a second fluid path (90) between the hydraulic cylinder (62) and the at least one pressure reservoir (78),
wherein in the first fluid path (88) between the hydraulic cylinder (62) and the at least one pressure reservoir (78) a pressure valve (98) is provided,
wherein a connecting line (86) extends between the hydraulic cylinder (62) and the first fluid path (88) and also the second fluid path (90), and
wherein at the second fluid path (90) a controllable valve (100) is provided that is operable in a first operating state and a second operating state to selectively enable a fluid flow through the first fluid path or the second fluid path.

2. The load balancing arrangement according to claim 1, wherein the second fluid path (90) is open in the first operating state, and wherein the second fluid path (90) is blocked direction-dependent in the second operating state.

3. The load balancing arrangement according to claim 1 or 2, wherein in the second operating state a return flow of the at least one pressure reservoir (78) to the hydraulic cylinder (62) via the second fluid path (90) is enabled, when an actual pressure on the part of the at least one pressure reservoir (78) is greater than a current system pressure on the part of the hydraulic cylinder (62).

4. The load balancing arrangement according to any of the preceding claims, wherein between the control unit (96) and the hydraulic cylinder (62) at least one further pressure reservoir (80) is formed, wherein a connecting line (86) between the control unit (96) and the hydraulic cylinder (62) couples with the further pressure reservoir (80).

5. The load balancing arrangement according to claim 4, wherein the pressure reservoir (78) is arranged as a supplemental pressure reservoir, wherein the further pressure reservoir (80) is arranged as a base pressure reservoir, wherein the base pressure reservoir and the supplemental pressure reservoir are in the first operating state substantially connected in parallel, and wherein the supplemental pressure reservoir is connected in the second operating state dependent on a current system pressure.

6. The load balancing arrangement according to claim 5, wherein in the second operating state of the controllable valve (100), when the system pressure increases, the first fluid path (88) is closed, when the system pressure comes below a defined pressure level, wherein the first fluid path (88) through the pressure valve (98) is open when the system pressure reaches the defined pressure level, and wherein the controllable valve (100) acts as a check valve.

7. The load balancing arrangement according to any of the preceding claims, wherein the pressure-path characteristic curve of the load balancing arrangement has in the first operating state a shape substantially without kinks, and wherein the pressure-path characteristic curve of the load balancing arrangement in the second operating state has a ramp having a greater slope than a mean slope of the pressure-path characteristic curve of the load balancing arrangement in the first operating state, and a substantially constant segment.

8. The load balancing arrangement according to any of the preceding claims, wherein the pressure-path characteristic curve of the load balancing arrangement has in the second operating state a direction-dependent shape, wherein the pressure-path characteristic curve reaches a pressure-plateau when pressure builds up at a path value that is smaller than a path value at which the pressure-path characteristic curve leaves the pressure-plateau when the pressure is reduced.

9. The load balancing arrangement according to any of the preceding claims, wherein the controllable valve (100) acts in the second operating state as a check valve when the system pressure exceeds a pressure threshold.

10. The load balancing arrangement according to any of the preceding claims, wherein the controllable valve (100) in the second fluid path (90) is provided with an actuator (102), by means of which the valve (100) is controllable.

11. The load balancing arrangement according to claim 10, wherein the actuator (102) is an electromagnet.

12. The load balancing arrangement according to any of the preceding claims, wherein the load balancing arrangement is provided for a multi-axis robot that comprises at least three coupling elements (14, 16, 18) that are connected by articulated joints, wherein the hydraulic cylinder (62) is arranged as a first hydraulic cylinder (162), wherein the load balancing arrangement further comprises the following:
- a second hydraulic cylinder (182) that is attachable to two coupling elements that are moveable with respect to one another, wherein a first end of the second hydraulic cylinder (182) is connectable with the second coupling element (16), and a second end is connectable with a third coupling element (18),
wherein the first hydraulic cylinder (162) is arranged as master cylinder (200) and the second hydraulic cylinder (182) is arranged as slave cylinder (202),
wherein the master cylinder (200) is coupled with a pressure reservoir (178) for storing fluidic energy, and
wherein the master cylinder (200) and the slave cylinder (202) are fluidically coupled with one another.

13. A robot, particularly an industrial robot according to the type of jointed-arm robot, having a load balancing arrangement (60) according to any of the preceding claims that is associated with two coupling elements (14, 16) of the robot that are connected by an articulated joint.

14. The robot according to claim 13, wherein the load balancing arrangement (60) is associated with a coupling element (14) arranged as a carousel (44) and a coupling element (16) arranged as a swing arm (46), wherein the hydraulic cylinder (62) is supported in an articulated manner at pivot points (68, 70), that are radially spaced away from a rotation axis (32) between the two coupling elements (14, 16).

15. The robot according to claim 14, wherein the hydraulic cylinder (62) is arranged in such a way that for a maximum relative movement between the carousel (44) and the swing arm (46) at the hydraulic cylinder (62) both a retraction movement and also an extending movement is present.

## Revendications

1. Agencement d'équilibrage de charge fluidique pour un robot multiaxial (10) qui présente au moins deux éléments de couplage (14, 16) reliés l'un à l'autre de manière articulée, l'agencement d'équilibrage de charge présentant ce qui suit :
- un vérin hydraulique (62) qui peut être fixé à deux éléments de couplage (14, 16) mobiles l'un par rapport à l'autre, une première extrémité du vérin hydraulique (62) pouvant être reliée à un premier élément de couplage (14), et une deuxième extrémité pouvant être reliée à un deuxième élément de couplage (16),
- au moins un accumulateur de pression (78) qui peut être couplé au vérin hydraulique (62), et
- une unité de commande (96) qui est disposée entre le vérin hydraulique (62) et ledit au moins un accumulateur de pression (78) pour coupler l'un à l'autre le vérin hydraulique (62) et ledit au moins un accumulateur de pression (78) de manière fluidique,
l'unité de commande (96) étant associée à un premier chemin de fluide (88) et à un deuxième chemin de fluide (90) entre le vérin hydraulique (62) et ledit au moins un accumulateur de pression (78),
une soupape de refoulement (98) étant prévue sur le premier chemin de fluide (88) entre le vérin hydraulique (62) et ledit au moins un accumulateur de pression (78), une conduite de raccordement (86) s'étendant entre le vérin hydraulique (62) et le premier chemin de fluide (88) ainsi que le deuxième chemin de fluide (90), et
dans lequel, pour le deuxième chemin de fluide (90), une soupape (100) pouvant être pilotée est prévue qui peut fonctionner dans un premier état de fonctionnement et un deuxième état de fonctionnement pour autoriser au choix un écoulement de fluide par le premier chemin de fluide ou le deuxième chemin de fluide.

2. Agencement d'équilibrage de charge selon la revendication 1, dans lequel le deuxième chemin de fluide (90) est ouvert dans le premier état de fonctionnement, et le deuxième chemin de fluide (90) est bloqué en fonction de la direction dans le deuxième état de fonctionnement.

3. Agencement d'équilibrage de charge selon la revendication 1 ou 2, dans lequel, dans le deuxième état de fonctionnement, un retour de l'au moins un accumulateur de pression (78) au vérin hydraulique (62) par le deuxième chemin de fluide (90) est permis si une pression actuelle du côté de l'au moins un accumulateur de pression (78) est supérieure à une pression actuelle du système du côté du vérin hydraulique (62).

4. Agencement d'équilibrage de charge selon l'une quelconque des revendications précédentes, dans lequel, entre l'unité de commande (96) et le vérin hydraulique (62), au moins un autre accumulateur de pression (80) est réalisé, une conduite de raccordement (86) entre l'unité de commande (96) et le vérin hydraulique (62) étant accouplée à l'autre accumulateur de pression (80).

5. Agencement d'équilibrage de charge selon la revendication 4, dans lequel l'accumulateur de pression (78) est réalisé sous la forme d'un accumulateur de pression complémentaire, l'autre accumulateur de pression (80) étant réalisé sous la forme d'un accumulateur de pression de base, l'accumulateur de pression de base et l'accumulateur de pression complémentaire étant connectés substantiellement en parallèle dans le premier mode de fonctionnement, et l'accumulateur de pression complémentaire étant mis en circuit dans le deuxième état de fonctionnement en fonction de la pression actuelle du système.

6. Agencement d'équilibrage de charge selon la revendication 5, dans lequel, dans le deuxième état de fonctionnement de la soupape (100) pouvant être pilotée, lors d'une augmentation de la pression du système, le premier chemin de fluide (88) est fermé si la pression du système soupasse un niveau de pression défini, le premier chemin de fluide (90) étant ouvert par la soupape de refoulement (98) si la pression du système atteint le niveau de pression défini, et la soupape (100) pouvant être pilotée agissant comme un clapet antiretour.

7. Agencement d'équilibrage de charge selon l'une quelconque des revendications précédentes, dans lequel la courbe caractéristique pression-course de l'agencement d'équilibrage de charge présente dans le premier mode de fonctionnement une allure substantiellement sans coude, et dans lequel la courbe caractéristique pression-course de l'agencement d'équilibrage de charge présente dans le deuxième état de fonctionnement une rampe ayant un gradient supérieur à un gradient moyen de la courbe caractéristique pression-course de l'agencement d'équilibrage de charge dans le premier état de fonctionnement, ainsi qu'un segment substantiellement constant.

8. Agencement d'équilibrage de charge selon l'une quelconque des revendications précédentes, dans lequel la courbe caractéristique pression-course de l'agencement d'équilibrage de charge présente dans le deuxième état de fonctionnement une allure dépendant de la direction, la courbe caractéristique pression-course, lors de la montée en pression, atteignant un plateau de pression à une valeur de course qui est inférieure à une valeur de course à laquelle la courbe caractéristique pression-course quitte le plateau de pression lors de la réduction de pression.

9. Agencement d'équilibrage de charge selon l'une quelconque des revendications précédentes, dans lequel la soupape (100) pouvant être pilotée agit comme un clapet antiretour dans le deuxième état de fonctionnement après dépassement d'un seuil de pression de la pression du système.

10. Agencement d'équilibrage de charge selon l'une quelconque des revendications précédentes, dans lequel la soupape (100) pouvant être pilotée est munie d'un actionneur (102) sur le deuxième chemin de fluide (90) qui permet de piloter la soupape (100).

11. Agencement d'équilibrage de charge selon la revendication 10, dans lequel l'actionneur (102) est un électroaimant.

12. Agencement d'équilibrage de charge selon l'une quelconque des revendications précédentes, dans lequel l'agencement d'équilibrage de charge est prévu pour un robot multiaxial qui présente au moins trois éléments de couplage (14, 16, 18) reliés les uns aux autres de manière articulée, le vérin hydraulique (62) étant réalisé en tant que premier vérin hydraulique (162), l'agencement d'équilibrage de charge présentant en outre ce qui suit :
- un deuxième vérin hydraulique (182) qui peut être fixé à deux éléments de couplage mobiles l'un par rapport à l'autre, une première extrémité du deuxième vérin hydraulique (182) pouvant être reliée au deuxième élément de couplage (16), et une deuxième extrémité pouvant être reliée à un troisième élément de couplage (18),
le premier vérin hydraulique (162) étant configuré en tant que vérin maître (200), et le deuxième vérin hydraulique (182) étant configuré en tant que vérin esclave (202),
le vérin maître (200) étant couplé à un accumulateur de pression (178) pour accumuler de l'énergie fluidique, et
le vérin maître (200) et le vérin esclave (202) étant couplés l'un à l'autre de manière fluidique.

13. Robot, en particulier robot industriel sous la forme d'un robot articulé, comprenant un agencement d'équilibrage de charge (60) selon l'une quelconque des revendications précédentes qui est associé à deux éléments de couplage (14, 16) du robot, reliés l'un à l'autre de manière articulée.

14. Robot selon la revendication 13, dans lequel le dispositif d'équilibrage de charge (60) est associé à un élément de couplage (14) réalisé sous la forme d'un carrousel (44) et à un élément de couplage (16) réalisé sous la forme d'une coulisse (46), le vérin hydraulique (62) étant reçu de manière articulée au niveau de points de pivotement (68, 70) qui sont espacés radialement d'un axe de rotation (32) entre les deux éléments de couplage (14, 16).

15. Robot selon la revendication 14, dans lequel le vérin hydraulique (62) est disposé de telle sorte que lors d'un mouvement relatif maximal entre le carrousel (44) et la coulisse (46), à la fois un mouvement de rétraction et un mouvement de déploiement résultent au niveau du vérin hydraulique (62).
